# EUROPEAN PATENT SPECIFICATION

(11) **EP 4 143 764 B1**
(45) Date of publication and mention of the grant of the patent: **03.12.2025**
(21) Application number: 21795835.4
(22) Date of filing: 27.04.2021
(51) Int. Cl.: G06Q 20/32, G07F 11/62, G07F 11/46, G07F 9/00, G07F 7/06

(54) **VENDING MACHINE SYSTEM**
VERKAUFSAUTOMATENSYSTEM
SYSTÈME DE DISTRIBUTEUR AUTOMATIQUE

(30) Priority: 27.04.2020 AU 2020901325; 15.03.2021 AU 2021900743
(43) Date of publication of application: 08.03.2023
(73) Proprietor: SodaX Pty Ltd, Scoresby, Victoria 3179 (AU)
(72) Inventor: DONAGHEY, Andrew, Mulgrave, VIC 3170 (AU)
(74) Representative: Zacco Denmark A/S
(86) International application number: PCT/AU2021/050379
(87) International publication number: WO 2021/217203

(56) References cited:
- EP-B1- 3 257 028
- WO-A1-2016/128472
- US-A1- 2016 098 694
- US-A1- 2016 284 153
- US-A1- 2017 301 172
- US-A1- 2017 372 555
- US-A1- 2018 061 170

## Description

### Technical Field

The present invention relates to a vending machine system, a bin assembly, an array of bin assemblies and a vending machine.

### Background

A popular way to make your own bubbly drinks at home is by way of a sparkling water maker, such as the one made by SodaStream^{™}. The sparkling water makers typically come with:
(a) sparkling drink maker housing;
(b) a plastic carbonating bottle; and
(c) a CO₂ cylinder.

Usage of the sparkling water maker depletes the CO₂ in the cylinder and, as such, the cylinder will need to be replaced from time to time.

The cylinders are currently swapped in one of the following ways:
1. Swap Your Cylinder On Shelf In-Store
   a. Customer goes to a store, such as Big W^{™}, where the empty cylinder can be swapped;
   b. Customer grabs off the shelf a full cylinder in box;
   c. Customer take the new cylinder to the checkout;
   d. The cashier scans the bar code of the new cylinder and the cash register displays the full cylinder price;
   e. The cashier scans the empty cylinder and the cash register displays:
      i. the exchange price reduction; and
      ii. the exchange price; and
   g. The customer then pays the exchange price and takes the full cylinder home.
2. Swap Your Cylinder at the Counter

Take your empty SodaStream^{™} cylinder to the counter at your local Target^{™}, Myer^{™}, Kmart^{™}, or David Jones^{™} to swap for a full one, with a customer assistant.
a. Customer goes to store, such as Kmart^{™}, with an empty cylinder;
b. Customer requests the store attendant to exchange an empty cylinder for a full one;
c. Store attendant takes customer's empty cylinder;
d. Store attendant gets a full cylinder from behind the counter and scans the barcode;
e. The cash register displays the exchange price; and
f. The customer then pays the exchange price and takes the full cylinder home.

It may not be convenient for the customer to travel all the way to a store to swap the cylinder in the manner set out in items 1 and 2 above. This may particularly be the case when the weather is inclement and/or travel is restricted.

Further, the above described system relies on the cashier, and ultimately the store owner, collecting the empty cylinders and contacting the sparkling water maker for collection and refilling. A difficulty here is that the sparkling water maker does not know, at any given point in time, how many empty cylinders are being collected by the stores that they supply. Further again, how human error may lead to cylinders not being collected in total by the store. They tend to go missing.

In an attempt to address some of the above issues, the replacement process has been localised at some petrol stations, such as those including a Coles Express^{™} Store. The improved process includes the steps of:
a. Customer goes to petrol station stocking the replacement cylinders with an empty cylinder;
b. Cashier scans the bar code of the empty cylinder or a pre-printed bar code;
c. The cash register displays the exchange price;
d. The customer then pays the exchange price;
e. The customer is given a key to the cage of replacement cylinders;
f. Customer unlocks the cage and replaces the empty cylinder with a full one; and
g. The customer returns the key to the cashier and takes the full cylinder home.

Being able to swap a cylinder at a local petrol station may be more convenient than travelling to a large store. However, the above described process is time consuming and relies on a large number of mechanical human steps, including the locking and unlocking of cages. Issues can arise with theft, for example, where the customer does not lock the cage properly. Also, the lack of security with the cage lends itself to the customer taking more than one cylinder without paying.

Also, as per processes 1 and 2, the petrol station process still relies on the cashier, and ultimately the store owner, collecting the empty cylinders and contacting the sparkling water maker for collection and refilling. Again the difficulty here is that the sparkling water maker does not know, at any given point in time, how many empty cylinders are being collected by the stores that they supply. Further again, how human error may lead to cylinders not being collected in total by the store. They tend to go missing.

Processes 1 and 2 also require the customer to directly interact with another person (i.e., the store assistant or cashier). For example, the customer must give the empty cylinder to the store assistant or cashier, and may be given the new cylinder directly by the store assistant or cashier. This process lends itself to hygiene risks and the spread of disease due to one or both of the following:
a. close proximity between individuals to facilitate the exchange of the cylinders; and
b. physical touching of the cylinders.

Furthermore, a customer accessing a cage of replacement cylinders can touch multiple surfaces, including:
a. the key to access the cage;
b. the lock on the cage; and
c. cylinders in the cage, including cylinders which they do not take but will later be claimed by other customers.

It is generally desirable to overcome or ameliorate one or more of the above described difficulties, or to at least provide a useful alternative.

In relation, EP 3 257 028 B1 relates to supplying and making available gas bottles for essentially domestic or professional use. US 2017/301172 A1 relates to remotely selling and delivering articles. In particular, the invention relates to a remote cage vending system. US 2017/372555 A1 relates generally to the vending of canisters through semi-automated systems and has particular relevance to the sale and/or exchange of propane canisters or tanks. US 2016/098694 A1 relates generally to vending and dispensing machines and in particular to such a machine for vending a compressed gas cylinders, such as those used in welding. US 2016/284153 A1 relates to a filling station for refillable fluid containers. In particular, a self-serve fluid refilling station with cylinder dispenser equipped with a pre-filled refillable fluid container exchange system. US 2018/061170 A1 generally relates to merchandisers such as coolers and other types of product dispensers.

### Summary

In accordance with the invention, there is provided a method for remotely controlling a CO₂ gas cylinder vending machine system, the method including:
displaying a remote vending machine user interface on a display of a user device;
receiving on the user device user input indicating a desire to engage with the vending machine system to perform at least one of the following operations:
   (a) return a CO₂ cylinder;
   (b) purchase a CO₂ cylinder; or
   (c) exchange a CO₂ cylinder;
transmitting the user input over a communications network to a communications interface of the vending machine system;
receiving the user input at the communication interface of the vending machine system; and
controlling the vending machine system, by a controller, based on the received user input.

Preferably, the method further includes the step of receiving, at a communications module of the user device, the remote vending machine user interface from the vending machine system.

Preferably, the method further includes:
the user device:
   scanning, by a camera of the user device, indicia uniquely identifying the vending machine system, wherein the indicia encodes a Uniform Resource Locator (URL) associated with the vending machine system;
   decoding the scanned indicia and retrieving the URL;
   sending a request to a server based on the URL via the communications network; and
   receiving, via a response from the server, the remote vending machine user interface from the vending machine system, and
the server:
   receiving the request based on the URL from the user device; and
   sending in a response the remote vending machine user interface to the user device via the communications network.

Advantageously, the method further includes:
the user device transmitting a request to the vending machine system to use the vending machine system; and
the vending machine system receiving the request from the user device to use the vending machine system.

Further, the method includes:
the vending machine system determining, based on the request, a proximity of the user device to the vending machine system;
the vending machine system determining, based on the determined proximity, whether the user device is within a proximity threshold distance to the vending machine system; and
if the user device is within the proximity threshold distance, controlling the vending machine system by the controller based on further user input.

In accordance with the invention, there is also provided, a method for remotely controlling a CO₂ gas cylinder vending machine system on a user device, the method including:
displaying a remote vending machine user interface on a display of the user device;
receiving on the user device user input indicating a desire to engage with the vending machine system to perform at least one of the following operations:
   (a) return a CO₂ cylinder;
   (b) purchase a CO₂ cylinder; or
   (c) exchange a CO₂ cylinder;
transmitting the user input over a communications network to a communications interface of the vending machine system.

The method preferably further includes:
scanning, by a camera of the user device, indicia uniquely identifying the vending machine system, wherein the indicia encodes a Uniform Resource Locator (URL) associated with the vending machine system;
decoding the scanned indicia and retrieving the URL;
sending a request to a server based on the URL via the communications network.; and
receiving, via a response from the server, the remote vending machine user interface from the vending machine system.

In accordance with the invention, there is also provided, a method for remotely controlling a CO₂ gas cylinder vending machine system, the method including:
receiving user input at a communication interface of the vending machine system;
controlling the vending machine system, by a controller, based on the received user input,
wherein the user input is conducted on a user device, and indicates a desire to engage with the vending machine system to perform at least one of the following operations:
   (a) return a CO₂ cylinder;
   (b) purchase a CO₂ cylinder; or
   (c) exchange a CO₂ cylinder.

Preferably, the method further includes the step of receiving a request from the user device to use the vending machine system.

Preferably, the method further includes:
determining, based on the request, a proximity of the user device to the vending machine system;
determining, based on the determined proximity, whether the user device is within a proximity threshold distance to the vending machine system; and
the controller only controlling the vending machine system based on the received user input if the user device is within the proximity threshold distance.

In accordance with the present invention, there is also provided, a vending machine system for CO₂ gas cylinders, the system including a controller in communication with a contactless user interface, a contactless payment system and an array of bin assemblies, wherein each one of the bin assemblies is shaped to at least partially receive an end of a CO₂ gas cylinder and includes a locking system for releasably securing therein a CO₂ gas cylinder, said system for performing the steps of:
(a) receiving user input through the contactless user interface; and
(b) at least one of (i) to (iii):
   (i) if the user input represents a desire to exchange a CO₂ gas cylinder, then the system performs the steps of:
      (A) receiving payment from the user through the payment system for a replacement CO₂ gas cylinder;
      (B) receiving a CO₂ gas cylinder in a first one of said bin assemblies; and
      (C) the locking system releasing a full CO₂ gas cylinder located in a second one of said bin assemblies for collection by the user,
   (ii) if said user input represents a desire to purchase a full CO2 gas cylinder without replacement, then the system performs the steps of:
      (A) receiving payment from the user through the payment system for a full CO2 gas cylinder without replacement; and
      (B) the locking system releasing a full CO₂ gas cylinder located in a third one of said bin assemblies for collection by the user, and
   (iii) if said user input represents a desire to return an empty CO₂ gas cylinder without replacement, then the system performs the steps of:
      (A) receiving an item in one of said bin assemblies;
      (B) the locking system locking the CO₂ gas cylinder in said one of said bin assemblies; and
      (C) issuing a credit to the user through the payment system for return of CO₂ gas cylinder without replacement.

Preferably, the contactless user interface includes at least one sensor button.

In accordance with the invention, there is also provided, a vending machine system for exchanging CO₂ gas cylinders, the system including a controller in communication with a user interface, a payment system and an array of bin assemblies, wherein each one of the bin assemblies is shaped to at least partially receive an end of a CO₂ gas cylinder and includes a locking system for releasably securing therein a CO₂ gas cylinder, said system for performing the steps of:
(a) receiving user input through the user interface; and
(b) if the user input represents a desire to exchange a CO₂ gas cylinder, then the system performs the steps of:
   (i) receiving payment from the user through the payment system for a replacement CO₂ gas cylinder;
   (ii) receiving a CO₂ gas cylinder in a first one of said bin assemblies; and
   (iii) the locking system releasing a full CO₂ gas cylinder located in a second one of said bin assemblies for collection by the user,
wherein the system includes an external door arranged to overlie the array of bin assemblies to inhibit ingress of contaminants therein.

Preferably, the door is releasably secured in position by the controller.

The vending machine system can be installed in any convenient location with 24 hour access. Customers (also referred to as "users") can use the vending machine system to swap an empty CO₂ gas cylinder for a full CO₂ gas cylinder.

Being able to swap a cylinder at a local vending machine of the above described type is more convenient than travelling to a large store. Furthermore, exchanging CO₂ gas cylinder using the above described vending machine minimises reliance on human steps for locking and unlocking of cages. The vending machine makes theft of CO₂ gas cylinders more difficult.

Further, the vending machine securely collects and safely stores returned CO2 gas cylinders. As such, accurate stock of cylinders is maintained by the vending machine.

### Brief Description of the Drawings

Preferred embodiments of the invention are hereafter described, by way of nonlimiting example only, with reference to the accompanying drawings, in which:
Figure 1 is a schematic diagram of a vending machine system;
Figure 2 is a perspective view of a CO2 cylinder and a vending machine that embodies the system of Figure 1;
Figure 3 is a flow diagram showing steps performed by the system shown in Figure 1;
Figures 4a and 4b are perspective views of clusters of bin assemblies in different conditions of use;
Figures 5a and 5b are perspective views of a bin assembly in different conditions of use;
Figure 6 is a section view of the bin assembly shown in Figure 5b through the line A-A;
Figure 7 is a perspective view of a sled of the bin assembly shown in Figure 5b
Figure 8a is a side view of the bin assembly shown in Figure 5b with a CO2 gas cylinder partly inserted therein;
Figure 8b is a section view of the bin assembly shown in Figure 5b with a CO2 gas cylinder partially inserted therein through the line A-A;
Figures 9a to 9c are partly transparent side views of the bin assembly shown in Figure 5b in different conditions of use;

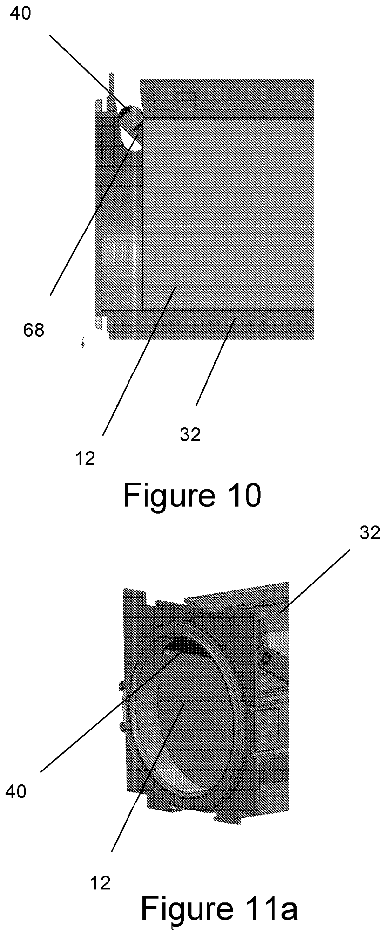

Figure 10 is an enlarged view of the bin assembly shown in Figure 8b in another condition of use;
Figure 11a is an enlarged end perspective view of the bin assembly shown in Figure 5a;

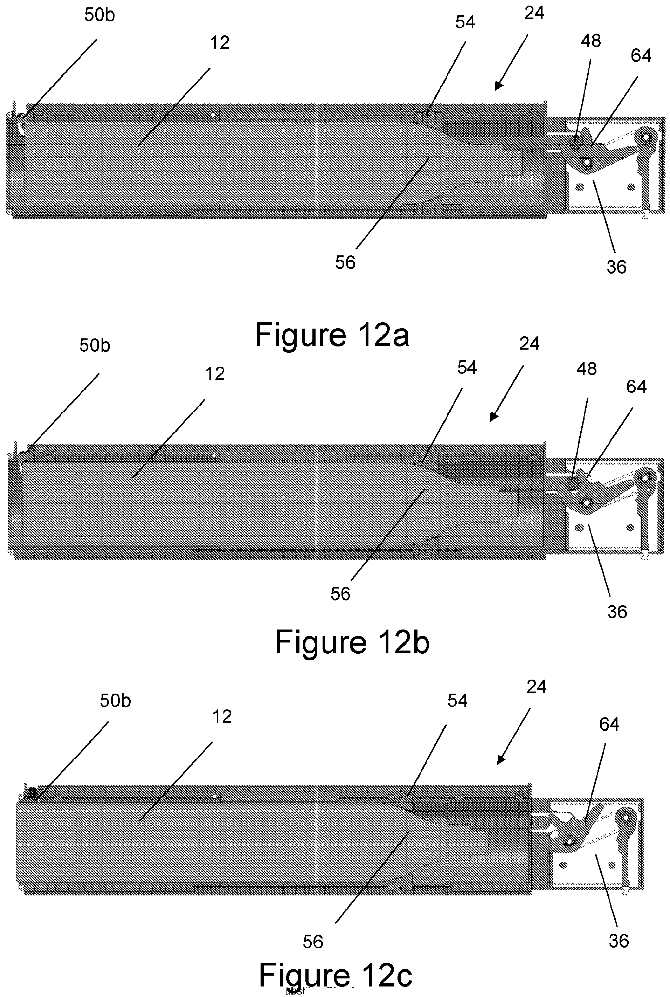

Figures 12a to 12c are section views through the line A-A of the bin assembly shown in Figure 5a in different conditions of use;
Figure 13 is a section views through the line A-A of the bin assembly shown in Figure 5b in different conditions of use; and
Figures 14a & 14b are enlarged end perspective views of an alternative bin assembly in different conditions of use;
Figure 15 is a schematic diagram showing component parts of the system shown in Figure 1;
Figure 16 is a diagram of a contactless user interface with sensor buttons;
Figure 17 is a flow diagram of receiving user input using a contactless user interface and a speech recognition system;
Figure 18 is a diagram of a contactless user interface for use with a speech recognition system;
Figure 19 is a schematic diagram of a system for controlling a vending machine;
Figure 20 is an exemplary remote vending machine user interface; and
Figures 21A & 21B are perspective views of the vending machine shown in Figure 2 fitted with a door.

### Detailed Description of Preferred Embodiments

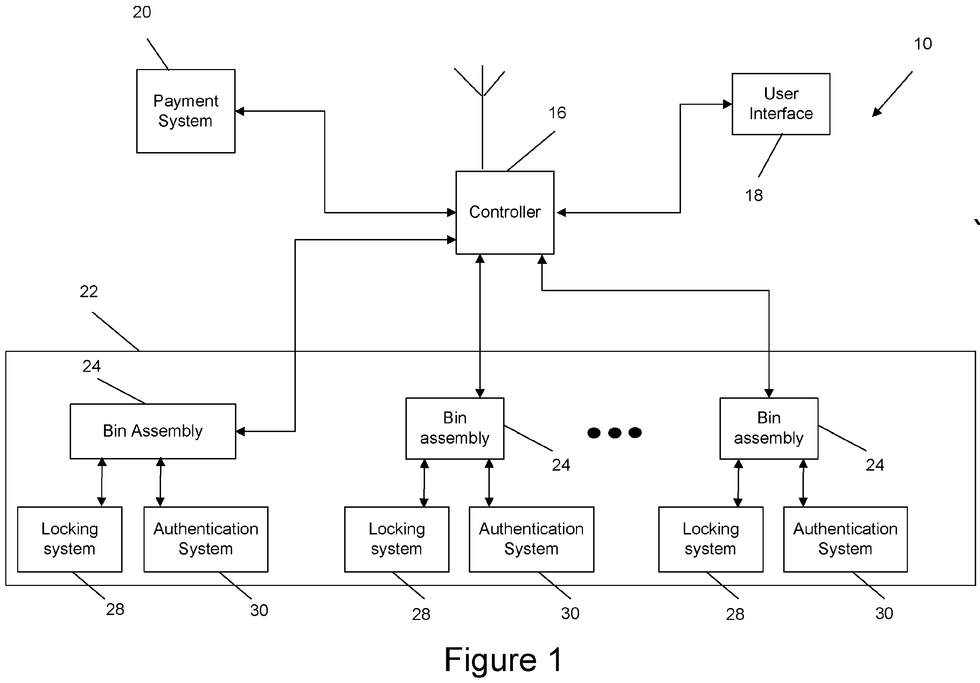

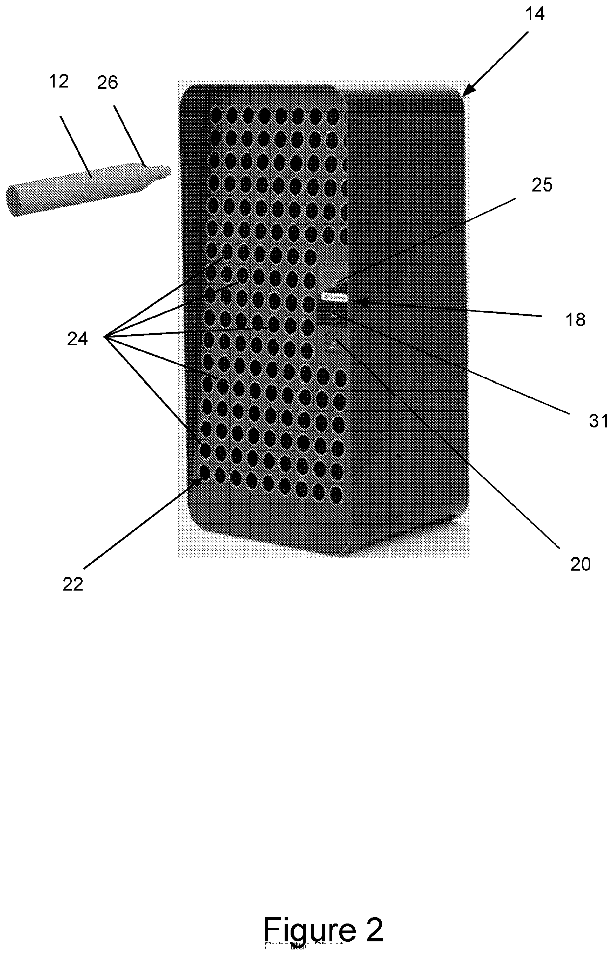

The vending machine system 10 shown in Figure 1 is used for exchanging CO₂ gas cylinders 12. The system 10 is advantageously embodied as a standalone vending machine 14 as shown in Figure 2 for swapping and buying new CO₂ cylinders. Alternatively, the components of the system 10 can be distributed over different locations and are in communication on standard communication networks using standard communication protocols.

The vending machine 14 can be installed in any convenient location with 24 hour access, for example. Customers (also referred to as "users") can use the vending machine 14 to swap an empty CO₂ gas cylinder 12 for a full CO₂ gas cylinder.

As shown in Figure 1, the system 10 includes a controller 16 in communication with a user interface 18, a payment system 20 and an array 22 of bin assemblies. Each one of the bin assemblies 24 is shaped to at least partially receive an end 26 of a CO₂ gas cylinder 12 and includes a locking system 28 for releasably securing therein a CO₂ gas cylinder 12.

Advantageously, the system 10 also includes an authentication system 30 for confirming that an item received therein is a legitimate CO₂ gas cylinder 12.

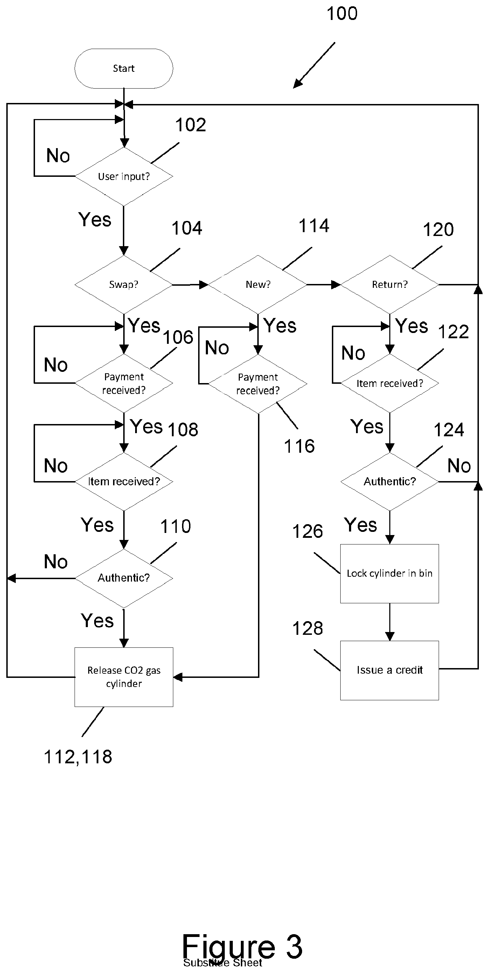

The system 10 performs the process 100 shown in Figure 3, including the step of receiving, at step 102, user input through the user interface 18. If, at step 104, the user input represents a desire to exchange a CO₂ gas cylinder, then the system 10 performs the steps of:
(a) receiving, at step 106, payment from the user through the payment system 20 for a replacement CO₂ gas cylinder 12;
(b) receiving, at step 108, an item in a first one of the bin assemblies 24;
(c) confirming, at step 110, through the authentication system 30 that the item is a legitimate CO₂ gas cylinder; and
(d) the locking system 28 releasing, at step 112, a full CO₂ gas cylinder 12 located in a second one of the bin assemblies 24 for collection by the user.

Advantageously, steps 106 and 108 can be performed in any order. For example, the step 106 of receiving payment can occur after the step 108 of receiving the item. In this embodiment, the step 102 of receiving user input could advantageously be equivalent to the step 108 of receiving an item. To this end, a customer could initiate an exchange by simply inserting a spent CO₂ gas cylinder into an empty bin assembly 24.

The user interface 18 shown in Figure 2 includes a "Swap" function button 25 that is used to represent a desire to exchange a CO₂ gas cylinder 12.

The user can perform this function by simply inserting the expired CO₂ cylinder 12 into an empty bin assembly 24 in the array 22, making a selection through the user interface 18 and making a payment through the payment system 20. The process is efficient and convenient with minimal human interaction. No issues arise with theft.

Further, the returned empty CO₂ gas cylinders 12 are securely stored in the machine 14. As such, there are no issues with the cylinders 12 not being collected properly by cashiers and cylinders 12 going missing.

In order to release a CO₂ gas cylinder 12, the controller 16 electronically triggers the locking system 28 on an appropriate bin assembly 24 to open. In response to this request, the locking system 28 releases the cylinder 12 to the user.

The step, 112, of releasing the CO₂ gas cylinder 12 preferably includes the step of identifying a suitable cylinder 12 to release. Advantageously, the locking system 28 releases a full CO₂ gas cylinder 12 from a bin 24 in the array 22 that is closest to the bin 24 where the empty CO₂ gas cylinder 12 was returned.

The system 10 preferably illuminates an LED ring on the empty bin assembly 24 selected to receive the empty CO₂ gas cylinder 12 from the user.

If, at step 114, the user input received represents a desire to purchase a full CO₂ gas cylinder 12 without replacement, then the system 10 performs the steps of:
(a) receiving, at step 116, payment from the user through the payment system 20 for a full CO2 gas cylinder 12 without replacement; and
(b) the locking system 28 releasing, at step 118, a full CO₂ gas cylinder 12 located in one of the bin assemblies 24 for collection by the user.

The user interface 18 shown in Figure 2 includes a "New" function button 31 that is used to represent a desire to purchase a full CO₂ gas cylinder 12 without replacement.

The step 118 of releasing the CO₂ gas cylinder 12 preferably further includes the steps of:
(a) engaging a height measurement system to measure a height of the user; and
(b) the locking system 28 identifying a bin assembly 24 with a full 'CO₂ gas cylinder 12 that is closest to the height of the user.

In doing so, the system 10 releases a cylinder 12 in a bin assembly 24 that relates to the height of the user:
- short person / disabled person, lower bin assembly 24 selected
- tall person, higher bin assembly 24 selected.

If, at step 120, the user input represents a desire to return an empty CO₂ gas cylinder 12 without replacement, then the system 10 performs the steps of:
(a) receiving, at step 122, an item in one of the bin assemblies 24;
(b) confirming, at step 124, through the authentication system 30 that the item is a legitimate CO₂ gas cylinder 12;
(c) the locking system locking, at step 126, the cylinder 12 in the bin assemblies 24;
(d) issuing, at step 128, a credit to the user through the payment system 20 for return of CO₂ gas cylinder 12 without replacement.

The system 10 preferably illuminates an LED ring on the empty bin assembly 24 selected to receive the empty CO₂ gas cylinder 12 from the user.

Advantageously, the system 10 performs the additional steps of asking the user if they want a receipt of the transaction through the user interface 18. The transaction being the conclusion of the exchange of a CO₂ gas cylinder 12, the purchase of a new CO₂ gas cylinder or the return of a CO₂ gas cylinder. This may be done by generating indicia on a display, for example. On receipt of confirmation from the user through the interface 18, the system 10 generates a receipt for the transaction. The system 10 then performs the step of providing the receipt to the user. This is done by printing a physical copy of the receipt for the user through the user interface 18. Alternatively, the receipt is provided by e-mail to the user, where the user enters his or her e-mail address through the user interface 18.

As described herein, the system 10 can perform steps that allow the user to interact with the system 10 with minimal or no contact with the system 10 and/or a vending machine 14 embodying the system 10.

In particular, where step 102 of receiving user input is equivalent to step 108 of receiving an item in a first one of the bin assemblies 24, this may be user input representing a desire to exchange a CO₂ cylinder. The receipt of the item (and, in some embodiments, the confirmation that the item is a legitimate CO₂ cylinder at step 110) is followed by the receipt of payment from the user through the payment system 20 for a replacement CO₂ gas cylinder 12 at step 106. The payment is received through contactless means that do not require the user to touch the system 10 or the vending machine 14. For example, the payment can be received, via a contactless payment system as described hereinbelow. Following receipt of the relevant payment at step 106, at step 112 the system 10 causes locking system 28 to release a full CO₂ gas cylinder 12 located in a second one of the bin assemblies 24 for collection by the user.

Furthermore, the user input received at step 102 can be equivalent to step 116 of receiving payment from the user through the payment system 20 for a full CO₂ gas cylinder 12 without replacement. In other words, if the user input at step 102 consists of the user processing a payment using the payment system 2 (i.e., step 116), this is user input representing a desire to purchase a full CO₂ cylinder 12 without replacement. Following the receipt of the relevant payment at step 116, at step 118 the system 10 causes locking system 28 to release a full CO₂ gas cylinder 12 located in a second one of the bin assemblies 24 for collection by the user.

Additionally, the user input received at step 102 may be equivalent to receiving an item in one of the bin assemblies 24 (at step 122, and in some embodiments the confirmation that the item is a legitimate CO₂ cylinder at step 124) followed by an absence of payment through the payment system 20 (e.g., within a prescribed period of time). Such user input represents a desire to return an empty CO₂ gas cylinder 12 without replacement. The system 10 then causes the locking system to lock the received cylinder 23 in the bin assembly 24 at step 126. The system can also issue a credit to the user that is associated with the return of the CO₂ cylinder without replacement. The system 10 may issue the credit in accordance with at least one of the following methods:
(i) through payment system 20;
(ii) by displaying a barcode containing data representing a credit transaction on user interface 18, which the user can scan using a user device (e.g., user device 87 as described hereinbelow) to receive the credit; and
(iii)by printing a receipt (via a printer associated with the system 10) displaying a barcode containing data representing a credit transaction, which the user can scan using a user device to receive the credit.

The system 10 may display one or messages to the user to indicate the appropriate user input at step 102 to initiate an exchange, purchase or return of a CO₂ cylinder. In one embodiment, instructions are displayed on user interface 18 indicating that the user should: (1) insert a used CO₂ cylinder and process a payment through payment system 20 to initiate an exchange, (2) process a payment through payment system 20 to initiate a purchase of a full CO₂ cylinder, or (3) insert a used CO₂ cylinder and wait to initiate a return without replacement.

Thus, the user is able to avoid touching any part of the system 10 and/or vending machine 14 apart from any of: a CO₂ cylinder the user is returning, a full CO₂ cylinder 12 that the user is collects, and a receipt printed by the system 10.

### Bin Assembly 24

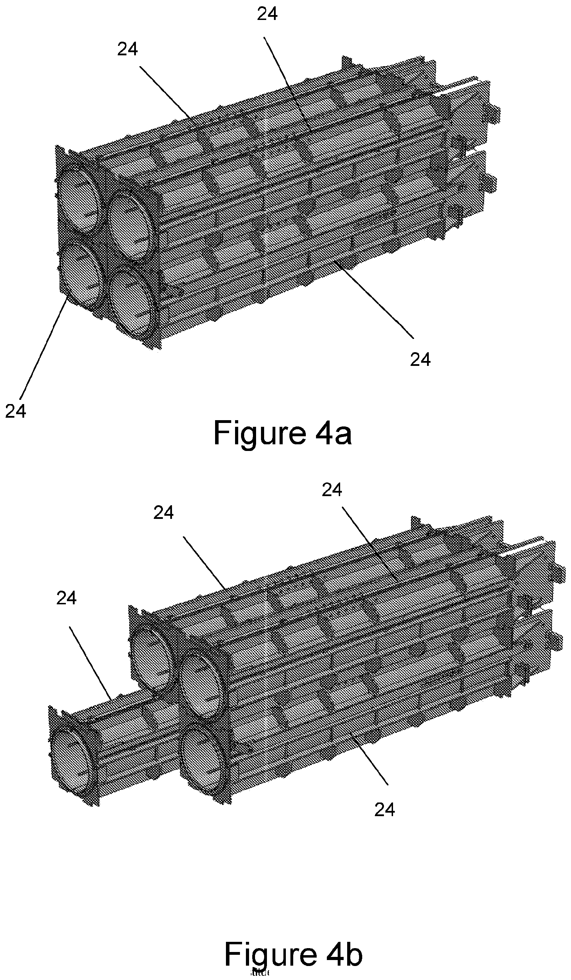

As shown in Figures 4a and 4b, the bin assemblies 24 have a modular structure that allows for easy connection and removal of individual bin assemblies 24 from the array 22. Individual bin assemblies 24 can be joined together in an array 22 of any size. Each individual bin assembly 24 can be slid out of the array 22 and replaced or serviced as needed.

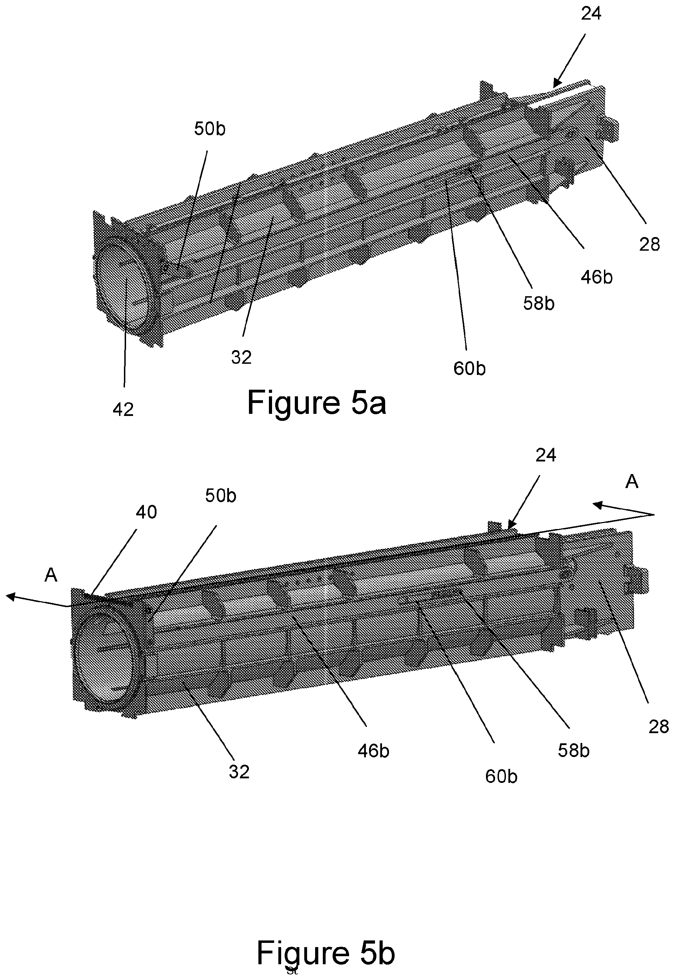

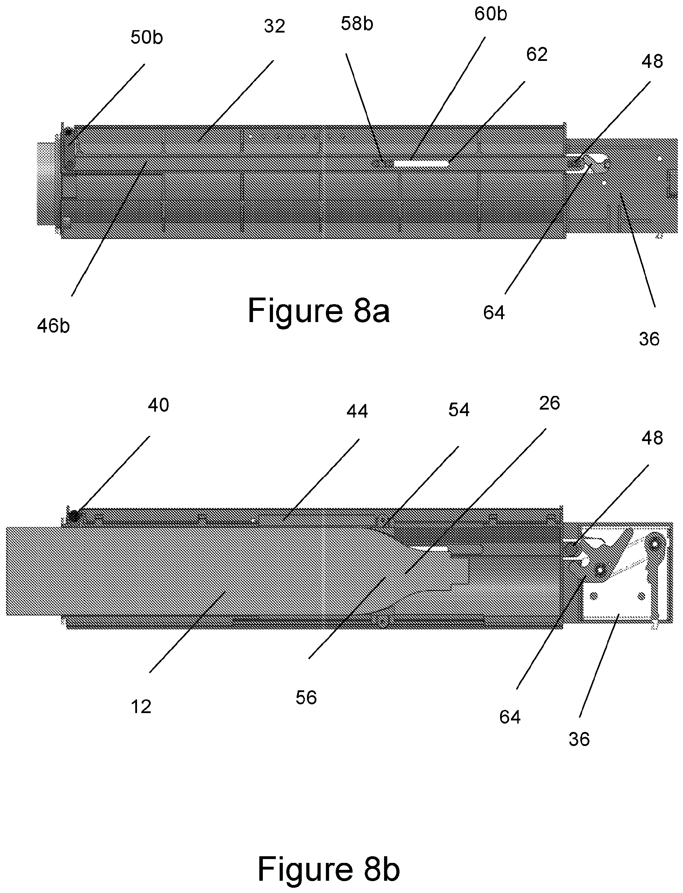

With reference to Figures 5a to 8b, each bin assembly 24 in the array 22 includes a tubular chassis 32 with an open end 42 that is shaped to receive and seat therein a CO₂ gas cylinder 12. As shown, the tubular chassis 32 is formed in two parts which facilitates easy assembly. Alternatively, the tubular chassis 32 could be any other shape capable of receiving, and securing therein, an end section of a CO₂ gas cylinder 12. In some embodiments, the tubular chassis 32 is capable of receiving and securing therein either of two end sections on opposite ends of a CO₂ gas cylinder. In alternative embodiments, the tubular chassis 32 is capable of securing one end of the CO₂ gas cylinder only (referred to as a 'securable end'), and not another end (referred to as a 'non-securable end').

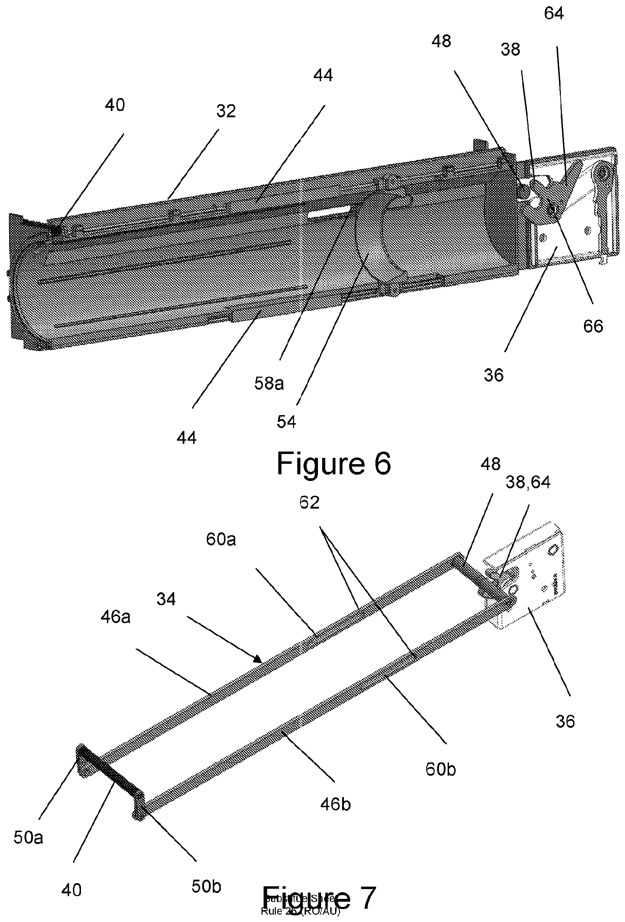

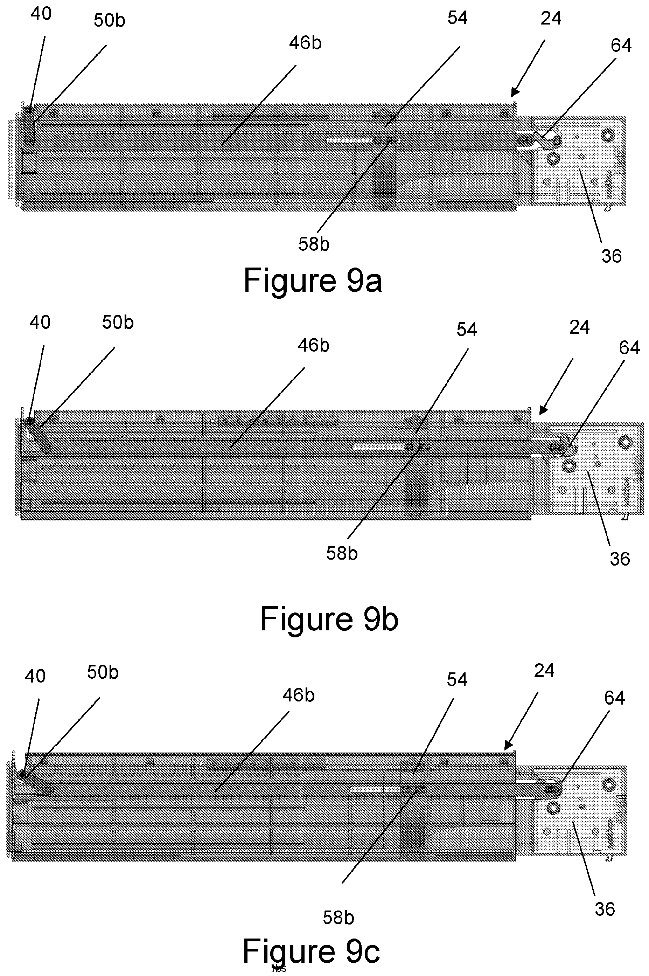

As particularly shown in Figure 7, the locking system 28 of each bin assembly 24 in the array 22 includes a sled 34 that engages the CO₂ gas cylinder 12 as it is inserted in to the tubular chassis 32. The sled 34 is adapted to translate with respect to the tubular chassis 32 towards a locked position in the manner shown in Figures 9a to 9c. The sled 34 is in the locked position when the cylinder 12 is fully inserted into the chassis 32, as shown in Figure 9c.

The locking system 28 of each bin assembly 24 also includes a rotary latch 36 that is engaged by the sled 34 as it translates towards the locked position. A latching arm 38 secures the sled 34 in the locked position.

As shown in Figures 9a to 9c, translation of the sled 34 towards the locked position pulls a locking bar 40 at least partially over the open end 42 of the tubular chassis 32 so as to secure the CO₂ gas cylinder 12 therein.

The locking system 28 also includes a tension spring 44 that resiliently urges the sled 34 away from the locked position. The tension spring 44 acts to drive the sled 34 towards the open end 42 of the chassis 32 when the locking system 28 releases the CO₂ gas cylinder 12. This facilitates easy removal of the CO₂ gas cylinder 12 from the vending machine 14.

As shown in Figures 6 and 7, the sled includes:
(a) two parallel long linkage members 46a, 46b separated at a common end by a latching bar 48, the long linkage members extending along opposed sides of the tubular chassis 32;
(b) two parallel short linkage members 50a, 50b pivotally secured at a common end to respective other ends of the of the long linkage members 46a, 46b;
(c) a locking bar 40 coupled between other ends of the short linkage members 50a, 50b; and
(d) a collar 54 shaped to receive a necked section 56 of a CO₂ gas cylinder 12 when inserted into the tubular chassis 32.

The collar 54 includes pair of pins 58a, 58b that extend in opposite directions into respective slots 60a, 60b of the long linkage members 46a, 46b. The collar 54 is adapted to translate with respect to the long linkage members 46a, 46b along the length of the slots 60a, 60b.

When a CO₂ gas cylinder 12 is inserted into the tubular chassis 32, the necked section 56 of the cylinder 12 engages the collar 54 and the collar 54 is subsequently urged to translate along the slots 60a, 60b towards the latching bar 48 on the sled 34.

Further, when the pins 58a, 58b of the collar 54 abut terminal end sections 62 of the slots 60a,60b, the cylinder 12 drives the sled 34 another 20mm, for example, towards the rotary latch 36, and the latching bar 48 engages an actuator arm 64 of the rotary latch 36 and urges it towards a locked position.

The double action of latching and locking of the locking system 28 secures the CO₂ gas cylinder 12 in the vending machine 14. Although the locking system 28 has been above described in terms of the sled 34 translating through the chassis 32 and latching to the rotary latch 36 and pulling down of the locking bar 40, other methods for releasably securing the CO₂ gas cylinders 12 in the vending machine 14 are anticipated. For example, the CO₂ gas cylinders 12 may be secured in the vending machine 14 by the locking system 28 from one end of the CO₂ gas cylinder 12 only (the securable end). Alternatively, CO₂ gas cylinders 12 may be secured in the vending machine 14 by the locking system 28 from either end.

The authentication system 30 includes:
(a) a latching sensor 66 for detecting the state of the rotary latch 36; and
(b) a locking sensor 68 for determining the state of the locking bar 40.

The latching sensor 66 and the locking sensor 68 confirm that an item inserted into the tubular chassis 32 is a legitimate CO₂ gas cylinder 12 when the sled 34 is in the locked position and the locking bar 40 at least partially overlies the open end 42 of the tubular chassis 32 so as to block removal of the cylinder 12.

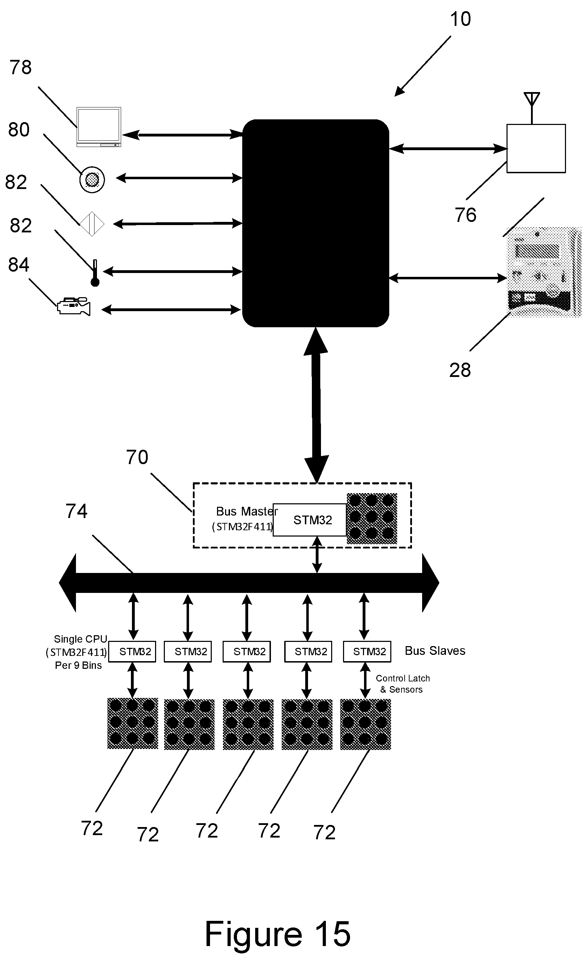

As shown in Figure 15, the authentication system 30 alternatively, or in addition, includes one or more of the sensors 82 in communication with the controller 16 by way of a I²C interface or a GPIO, for example:
(a) eddy current sensors;
(b) Hall effect sensors;
(c) micro switches;
(d) weight sensors;
(e) bar code readers; and/or
(f) image sensor.

These sensors act to confirm that the item inserted into the chassis 22 is a legitimate CO₂ gas cylinder 12.

In one embodiment, the array 22 of bin assemblies 24 is made up of a plurality of clusters 72 of sub-arrays of bin assemblies. For example, each cluster includes nine bin assemblies 24. The clusters 72 are modular and can be separately removed from the array 22 for repair, for example.

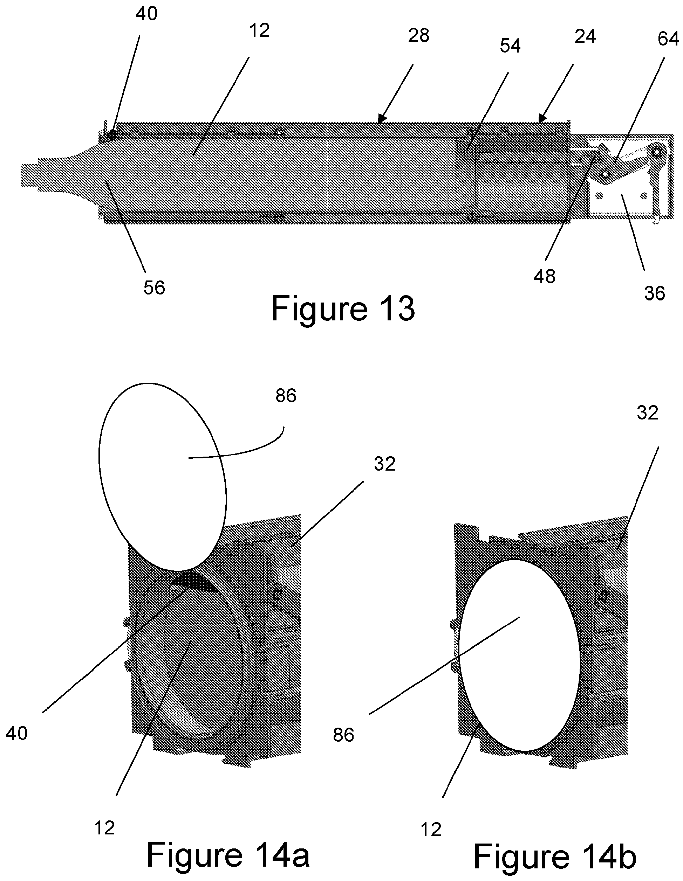

In the embodiment shown in Figures 14a and 14b, each bin assembly 24 includes a door 86 that is operable between open and closed conditions of use. In the closed condition of use, the door 86 overlies the open end 42 of the tubular chassis 32 and inhibits ingress of external elements into the bin assembly 24. For example, the door 86 inhibits entry of rain and dust into the bin assembly 24 when in the closed position. The door is preferably IP66 rated or similar.

When arranged in the open condition of use, the door 86 allows full access to the tubular chassis 32 to facilitate insertion and removal of CO₂ gas cylinders 12 into/from the machine 14.

Each bin assembly 24 includes an actuator (not shown) that drives the door 86 between the open and closed conditions of use. The actuator is in communication with the controller 16 which governs its operation.

Advantageously, the locking system 28 includes use of the door 86 to secure a CO₂ gas cylinder in a tubular chassis 32 of a bin assembly.

As shown in Figure 13, if a user inserts the cylinder 12 the wrong way, the locking system 28 will not be able to lock the cylinder 12 in the chassis 32 and the process will abort.

Alternatively, the user interface 18 is a contactless user interface 85. Advantageously, the contactless user interface 85 is a hands free interface that operates from voice commands or hand gestures.

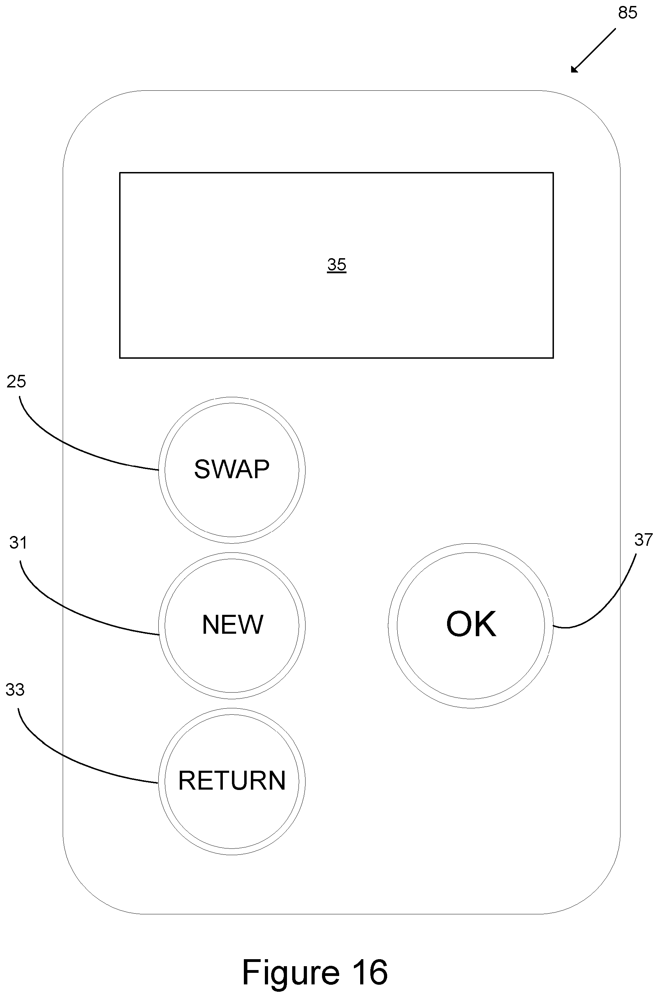

The contactless user interface 85 may include at least one sensor button. Figure 16 shows an embodiment in which the contactless user interface 85 has a display 35 and four sensor buttons, being:
(i) the "Swap" function button 25 that is used to represent a desire to exchange a CO₂ gas cylinder 12;
(ii) the "New" function button 31 that is used to represent a desire to purchase a full CO₂ gas cylinder 12 without replacement; and
(iii)a "Return" function button 33 that is used to represent a desire to return an empty CO₂ gas cylinder 12 without replacement;
(iv)a "Confirm" or "OK" button 37 that is used to confirm that an activated button reflects the user's desired operation of the vending machine system 10 (e.g., to allow a user to correct an erroneous activation of a sensor button).

Each sensor button is activated by a user without requiring the user to come into physical contact with the button or any other part of the vending machine system 10. For example, each sensor button may be an infrared sensor button that is activated by a user holding a portion of their hand over the button in close proximity. However, each sensor button can also be any other kind of suitable sensor that can be activated by the user without touching it. Each of the sensor buttons can include a visual indicator to indicate to the user that it has been activated, such as an LED light on or around the button.

The contactless user interface 85 may include a proximity sensor 86 for sensing when a user has approached the vending machine system 10. The proximity sensor 86 detects the presence of a user in the vicinity of the vending machine system 10, and may only detect the presence of a user within a particular radius of the vending machine system 10. The proximity sensor 86 may include, for example, one or more of the following:
(i) an optical sensor such as an infrared sensor;
(ii) an acoustic sensor such as an ultrasonic sensor;
(iii) a camera or video camera; and
(iv) a microwave sensor.

The controller 16 is configured to switch the vending machine system 10 from a low power mode to a normal operation mode when the proximity sensor 86 senses that a user has approached the system 10. Therefore, if the proximity sensor 86 detects that a user has approached the vending machine system 10, e.g., because it detects an object within a threshold vicinity of the vending machine system 10, the controller 16 switches the vending machine system 10 out of the low power mode into the normal operation mode so that the user can interact with the vending machine system 10, e.g., to return, purchase and/or exchange a CO₂ gas cylinder 12. After a transaction with the user has been completed, the controller 16 automatically switches the vending machine system 10 back into the low power mode in order to reduce its power consumption. In the low power mode, some features of the vending machine system 10 such as the authentication system 30 and the payment system 20 may be disabled.

The contactless user interface 85 may include a speech recognition system configured to receive a user voice command via the microphone 93 and determine whether the user voice command corresponds to a user input representing a desire to either exchange, purchase or return a CO₂ gas cylinder 12.

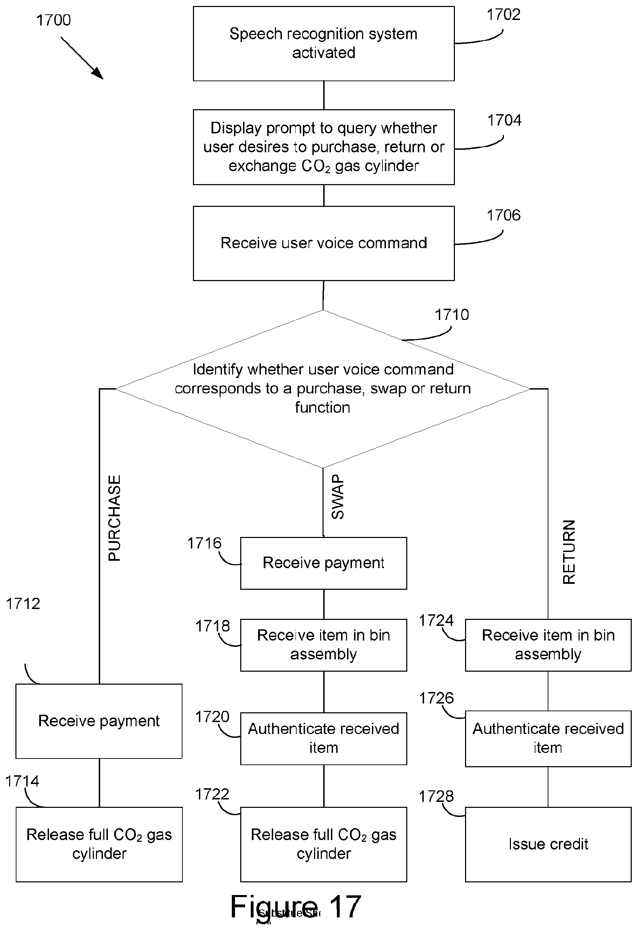

As shown in Figure 17, the contactless user interface 85 may perform a method 1700 including the following steps:
(i) activate the speech recognition system (step 1702);
(ii) display a prompt to query the user's intention, i.e., when the user desires to purchase, return or exchange a CO₂ gas cylinder 12 (step 1704);
(iii) receive a user voice command (step 1706);
(iv) identify a function corresponding to the user voice command (step 1710);
(v) if the user voice command corresponds to a purchase function:
   a. receive payment from the user through the payment system 20 (step 1712); and
   b. release a full CO₂ gas cylinder from one of the bin assemblies 24 (step 1714)
(vi) if the user voice command corresponds to a swap function:
   a. receive payment from the user through the payment system 20 (step 1716);
   b. receive an item in one of the bin assemblies 24 (step 1718);
   c. authenticate the received item (step 1720); and
   d. release a full CO₂ gas cylinder from one of the bin assemblies 24 (step 1720).
(vii) if the user voice command corresponds to a return function:
   a. receive an item in one of the bin assemblies 24 (step 1724);
   b. authenticate the received item (step 1726); and
   c. issue a credit to the user through the payment system 20 (step 1728).

The speech recognition system is activated at step 1702. The controller 16 may activate the speech recognition system, e.g., based on the proximity detector 86 sensing that a user has approached the vending machine system 10, or based on an item being received in one of the bin assemblies 24. Therefore, the steps may occur in more than one order - for example by the step of receiving an item in the bin assembly 24 (step 1718 or 1724) occurring prior or simultaneously to the speech recognition system being activated (step 1702).

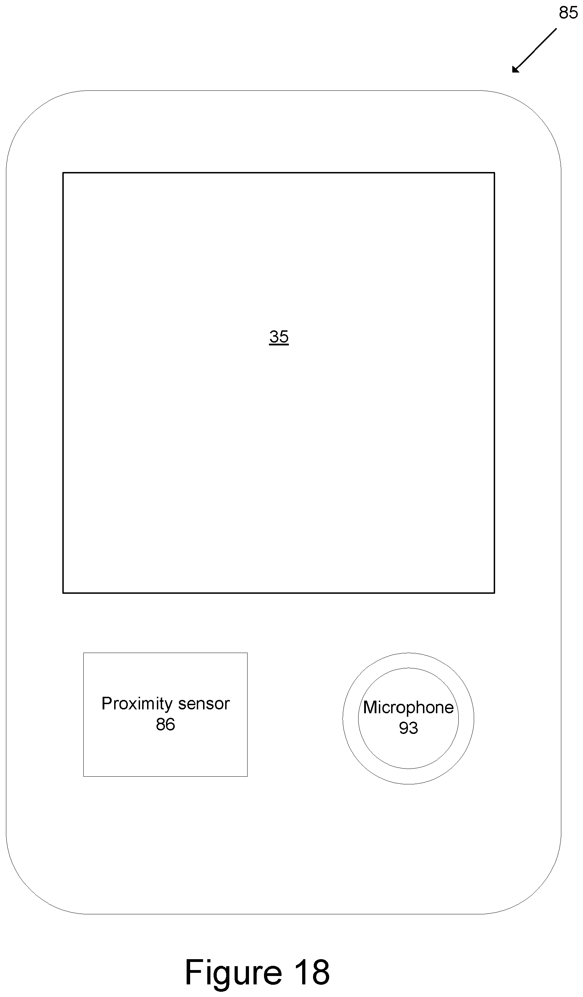

As shown in Figure 18, the contactless user interface 85 may include a display 35, the proximity sensor 86 and a microphone 93. The display may render prompts and other messages to be displayed to the user, e.g., at step 1704 of method 1700.

Advantageously, the instead of a rotary latch 36, the bin assemblies 24 include a worm drive.

### Controller 16

In the example shown in Figure 15, the system 10 includes:
(a) a controller 16 includes a Raspberry Pi 4 Model B 2GB that includes:
   (i) 1.5GHz quad-core ARM Cortex-A72 CPU
   (ii) VideoCore VI graphics
   (iii) 4kp60 HEVC decode
   (iv) True Gigabit Ethernet
   (v) 2.4 GHz and 5.0 GHz IEEE 802.11ac wireless, Bluetooth 5.0, BLE
   (vi) 2 × USB 3.0 and 2 × USB 2.0 ports
   (vii) 2 × micro-HDMI ports (1 × 4kp60 or 2 × 4kp30)
   (viii) USB-C for input power, supporting 5.1V 3A operation
   (ix) LPDDR4 RAM 4GB

The controller 16 is in communication with the bin assemblies 24 by way of the a Bus Master. This would normally be the closest set of 9 bins to the Controller 16.

The protocol between the Controller 16 and the Bus Master 70 supports the ability to communicate via RS485 Bus 74 which can send and receive data from each individual Bin assembly 24 back through the Bus Master 70 to the controller 16.

The system 10 supports the ability for remote updating of both Firmware and Applications, where required.

As shown in Figure 15, the user interface 18 includes a touch screen 78 and touchless sensors 80 that are configured to interface with the controller 16 through respective USB and GPIO interfaces.

The controller 16 is preferably in communication with a facial recognition system 84 by way of a MIPI / DSI interface.

The controller 16 is preferably a control module including a central processing unit. For example, the controller 16 includes a Broadcom BCM2711 or similar and the CPU for cluster of nine bins 24 will be a STM32F411 or similar. The central processing unit is in communication with non-transient data storage that include instructions stored there on that engage the system components to perform the steps 100 shown in Figure 3.

Alternatively, the controller 16 includes a plurality of central processing units each in communication with non-transient data storage that include instructions stored there on that engage the system components to perform the steps 100 shown in Figure 3.

Further, the controller can include a field programmable gate array that has been configured to engage the system components to perform the steps 100 shown in Figure 3.

### Payment System 20

As shown in Figure 2, the payment system 20 includes a payment terminal in communication with the controller 16 via a USB port or a TTL UART. The payment system 20 uses standard systems for effecting point of sale transactions.

The payment system 20 may be configured to receive payment in the form of a cryptocurrency (referred to as a 'crypto-payment').

The payment system 20 may be a contactless payment system, such that the user does not have to come into physical contact with the payment system 20 (or the vending machine system 10) in order to execute a payment for a new or replacement CO₂ gas cylinder 12, or a credit for return of a CO₂ gas cylinder 12. For example, the contactless payment system may be configured to receive payment from the user via a contactless payment platform such as Mastercard's Paypass^{™} platform.

### Vending Machine 14

As shown in Figure 2, the vending machine 14 has an open front to allow entry and exit of CO₂ gas cylinders. The vending machine 14 preferably provides the following advantages:
- The location of the cylinders 12 is known at any time - both empty and full
- The transactions occur in real time
- Data on each exchange is recorded by the machine, including customer info, for later use which can help to determine behavioural patterns (when customers are likely to complete a transaction and demographics
- The vending machine 14 is adapted to send realtime information back to a central server, reporting on stock levels and the condition of the machine.
- The vending machine is adapted to receive information from the central server that can be used to control the operation of the machine, including the price real-time (anytime) - option for different prices in different locations
- Camera in vending machine (face recognition) - complete a transaction with customers consent
- Face recognition to determine height of person which allows the machine to eject a cylinder or request insertion of cylinder based on that person's height (wheelchair as example)
- Confirmation of person standing in front of vending machine (vending machine issuing random number, person keys into mobile to confirm they are physically there)
- User credits can be in the form of gift cards, or a credit to a bank account or credit / debit card
- Loyalty Card

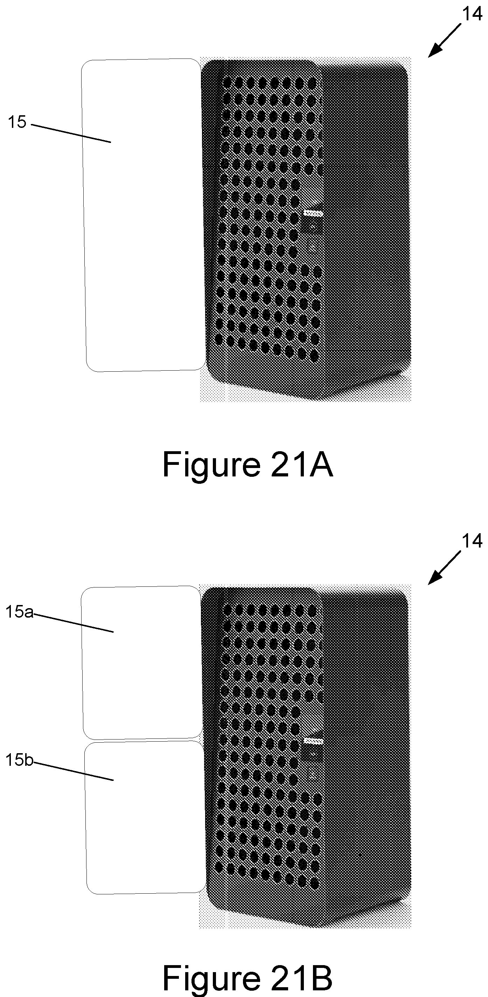

Alternatively, the vending machine 14 includes one or more main doors 15 to safe guard the array 22 of bin assemblies 24 from ingress of contaminants (such as dust and water), as shown in Figures 21A and 21B. Each main door 15 has an Ingress Protection rating of IP66. Each main door 15 is hinged to allow access to the bin assemblies 24. Each main door 15 is biased so as to default closed position covering the bin assemblies 24.

Each main door 15 preferably includes a lock (not shown). This may protect the array 22 of bin assemblies 24, and the CO₂ cylinders from exposure to the elements (e.g., by the door blowing open) as well as from tampering or other deliberate damage. The system 10 communicates with the lock to release the door 15 when the system receives appropriate user input. For example, the system 10 unlocks the main door 15 after it has received payment through payment system 20 for purchase or exchange of a CO₂ cylinder 12. After the user has appropriately inserted and/or retrieved the CO₂ cylinder 12 (as indicated by their user input), the system 10 locks the main door 15. The system 10 advantageously includes an actuator (not shown) that operates to open and close the door based on a communication sent from the controller 16. The system 10 may automatically open and close the door 15 so that the user does not have to touch the door to access the array 22 of bin assemblies 24 to insert or retrieve a CO₂ cylinder. The system 10 may lock/unlock main door 15 by the controller 16. The system 10 may automatically open and close main door 15 by the controller 16.

Figure 21B shows an embodiment of vending machine 14 that has two main doors: high main door 15a and low main door 15b. In accordance with this embodiment, the system 10 unlocks one of the high main door 15a and the low main door 15b based on one or both of:
(i) one or more bin assemblies 24 available to receive a used CO₂ cylinder inserted by the user; and
(ii) a bin assembly 24 that has released a full CO₂ cylinder for the user to retrieve.

Alternatively, the system 10 unlocks both of the doors 15a and 15b, e.g., so that the user can choose which bin assembly 24 in the array 22 to insert the used CO₂ cylinder.

### Remote control of vending machine system 10

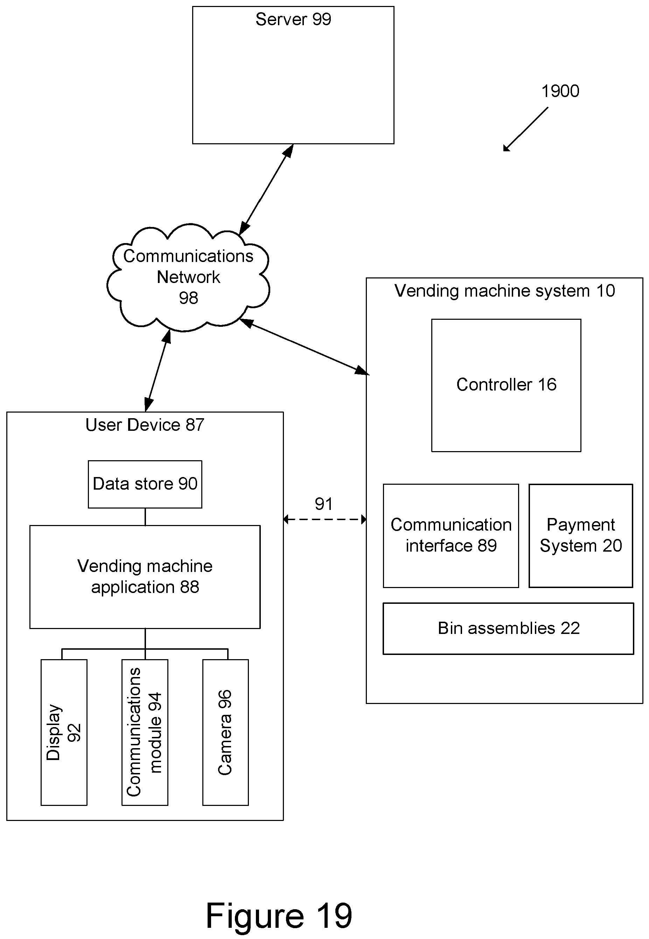

The system 1900 shown in Figure 19 is used for remotely controlling a vending machine system 10 for CO₂ gas cylinders 12 using a user device 87. As described hereinabove, the vending machine system 10 includes controller 16, payment system 20, bin assemblies 22. The vending machine system may also include a communication interface 89 for exchanging data via communications network 89 and/or wireless communications link 91.

The user device 87 includes a vending machine application 88, data store 90, display 92, communication module 94 and camera 96. User device may be a mobile phone, tablet device, laptop computer or any other suitable computing device.

The system 1900 performs a method for remotely controlling a CO₂ gas cylinder vending machine system, including steps of:
(1) displaying a remote vending machine user interface 200 on display 92 of the user device 87;
(2) receiving on the user device 87 user input indicating a desire to engage with the vending machine system 10 to perform at least one of the following operations:
   (a) return a CO₂ cylinder 12;
   (b) purchase a CO₂ cylinder 12; or
   (c) exchange a CO₂ cylinder 12;
(3) transmitting the user input over communications network 98 to a communications interface 89 of the vending machine system 10;
**(4)** receiving the user input at the communication interface 89 of the vending machine system 10; and
(5) controlling the vending machine system 10, by controller 16, based on the received user input.

A vending machine application 88 is executed on user device 87 to provide functionality to the user via the remote vending machine user interface 200, displayed to the user on display 92.

Vending machine application 88 is a specialised software application that enables communication between the user device 87 and one or more servers and/or other devices over communications network 98. The application 88 may be a native application on the user device that has access to the communications network 98, which may be downloadable from a mobile software distribution platform. However, application 88 can also be a web application (or 'web app') that is accessed through a web browser on the user device 87 by downloading one or more webpages hosted by a server 99.

The vending machine application 88 may require the user to login with their user account details, e.g., with an account username and password, so that any operation of the vending machine system 10 and corresponding transactions can be tracked and stored to data store 90, and later transmitted to server 99 to be stored in a server data store again the user's account details.

The user device 87, operable by the user, is in communication with server 99 via communications network 98. Vending machine system 10 may also be connected to communications network 98, and therefore the user device 87 and the vending machine system 10 may be able to communicate with each other over communications network 98.

The communications network 98 can be a local or wide area network, or a combination of the plurality of different local or wide area some networks. The user device 87 includes a communications module 94 configured to exchange data over the communications network 98. The server 99 receives requests from the user device 87 in relation to operating a particular vending machine system 10. The server 99 processes the requests and communicates with the vending machine system 10 to accordingly perform relevant operations.

Alternatively or additionally, the user device 87 may directly communicate with the vending machine system 10 via wireless communications link 91. The wireless communication link 91 uses a standard communication protocol such as: Bluetooth, BLE, Wi-Fi or Near-Field Communication (NFC). Wireless communications link 91 is formed between the communications module 94 of the user device 87 and the communication interface 89 of the vending machine system 10.

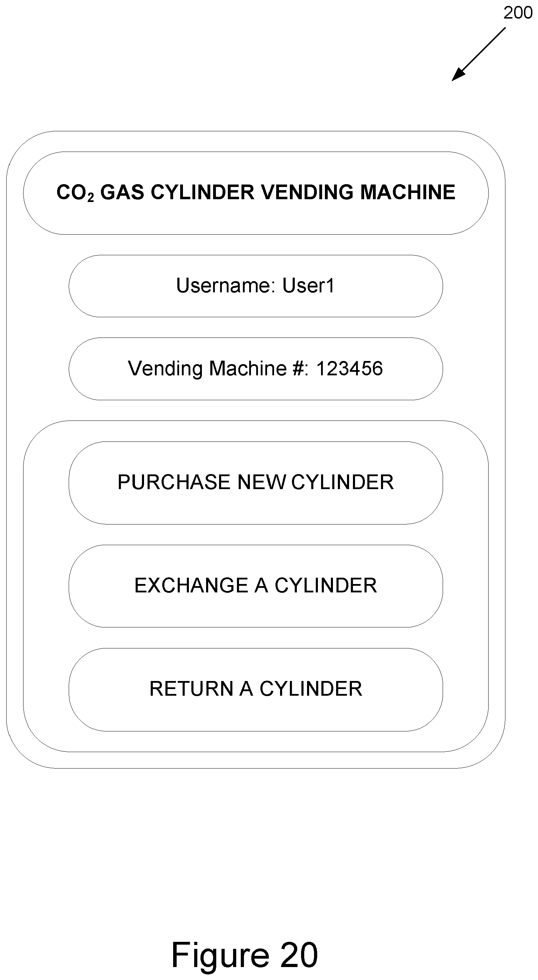

Figure 20 shows an exemplary remote vending machine user interface 200 which may be displayed by the user device 87 on display 92. The remote vending machine user interface 200 is configured so that when displayed on display 92, the user is able interact with the user interface 200 so as to use the vending machine application 88 to select one or more options to operate the vending machine system 10, e.g., the "purchase", "exchange" and/or "return" functions as described hereinabove. The user may interact with the user interface 200 via, for example, a touch sensitive display, a stylus, a microphone of the user device 87 or one or more controls of the user device (e.g., mechanical buttons).

The communications module 94 of the user device 87 receives a remote vending machine user interface 200 from the vending machine system 10. The remote vending machine user interface 200 allows the user to exercise user input relating to their desired operation of the vending machine system 10 on the user device 87, rather than the user interface 18 of the vending machine system 10. In this way, the user can avoid touching or coming into close proximity with a surface of the user interface 18 which may have been touched by previous users of the vending machine system 10. The remote vending machine user interface 200 may be unique to vending machine system 10, i.e., each of a plurality of vending machine systems 10 corresponds to a unique remote vending machine user interface.

The remote vending machine user interface 200 is transmitted by the communication interface 89 of the vending machine system 10, and received by the communications module 94 of the user device 87 via at least one of the following:
(a) the communications network 98; and
(b) a wireless communications link with the communications interface 89 of the vending machine system 10.

The remote vending machine user interface 200 may only be transmitted by the communication interface 89 if the user device 87 is within a certain proximity of the vending machine system 10. This ensures that the vending machine application 88 does not receive any user input relating to a particular vending machine system 10 when the user is not within a certain proximity of the system 10 such that they user is likely to actually interact with the system 10 (e.g., to purchase, exchange or return a CO₂ gas cylinder).

The method may include the user device 87 performing the following steps:
(i) scanning, by the camera 96 of the user device 87, indicia uniquely identifying the vending machine system 10, wherein the indicia encodes a Uniform Resource Locator (URL) associated with the vending machine system 10;
(ii) decoding the scanned indicia and retrieving the URL;
(iii) sending a request to the server 99 based on the URL via the communications network 98; and
(iv) receiving, via a response from the server 99, the remote vending machine user interface 200 for the vending machine system 10.

The method may include the server 99 performing steps of:
(i) receiving the request based on the URL from the user device 87;
(ii) sending, in a response, the remote vending machine user interface 200 to the user device 87 via the communications network 98.

The indicia uniquely identifying the vending machine system 10 is a barcode such as a 2D barcode, e.g., a Quick-Response (QR) code. The indicia is located on a vending machine 14 that includes vending machine system 10 such that it is accessible to be scanned by the user using the camera 96 of the user device 87. The indicia encodes a URL to which a web request can be sent by the communications module 94 of the user device 87 to server 99 located at that URL. The URL may be associated with and thereby give the user access to the vending machine application 88 where it is a web application. Alternatively, the URL may be associated with a web resource, which when requested by the user device 87, allows the user device 87 to receive the remote vending machine user interface 200 for the vending machine system 10 (e.g., for use with a native application).

The user device 87 decodes the scanned indicia by executing instructions stored in data store 90, such as instructions associated with stored barcode or QR code reading software. The user device 87 may alternatively transmit an image of the indicia to the server 99, which decodes the indicia and sends a response containing the URL back to the user device 87.

The user device 87 transmits a request to the vending machine system 10 to use the vending machine system 10. The request may be made in response to user input indicating such a request on the user device 87. The vending machine system 10 receives the request from the user device 87 to use the vending machine system 10. The request is received at the communication interface 89, and may be communicated over communications network 98 or wireless communications link 91.

Upon receiving the request, the vending machine system 10:
(i) determines, based on the request, a proximity of the user device 87 to the vending machine system 10;
(ii) determines, based on the determined proximity, whether the user device 87 is within a proximity threshold distance to the vending machine system; and
(iii) if the user device is within the proximity threshold distance, controlling the vending machine system by the controller based on further user input.

The proximity threshold is, for example, two meters. Alternatively, the proximity threshold is any suitable range that a user can functionally interact with the system 10.

In one embodiment, the step of determining a proximity of the user device 87 is effected by the system 10 completing a handshake with the user device 87. For example, the system 10 generates:
(a) a number on the vending machine screen 78 and prompts the user to enter the number into the displayed number into the device 87; and/or
(b) scan a QR code; and/or
(c) an SMS with a number that is sent to a number that is keyed into the vending machine by the user.

The vending machine system 10 may determine the proximity of the user device 87 based on location data included in the request.

Therefore, any further user input by the user on the user device 87 will not prompt the vending machine system 10 to perform further steps unless the user is within the proximity threshold distance. This may prevent users from erroneously attempting to interact with a vending machine system 10 that is not close by (e.g., another vending machine system in a different location that the user has previously interacted with), as well as users who deliberately attempt to interfere with the vending machine system 10 for illegitimate purposes (e.g., to prevent legitimate users from interacting with the system 10).

The vending machine application 88 may also be capable of processing payments which are then communicated to the payment system 20 of the vending machine system 10 (e.g., over communications network 98). The user device 87 performs steps of:
(i) receiving user input corresponding to a payment; and
(ii) transmitting a notification of the payment to the communications interface 89 of the vending machine system 10,
while the vending machine system 10 performs steps of:
(i) receiving the notification of the payment at the communications interface 89 of the vending machine system 10; and
(ii) communicating, by the controller 16, to payment system 20 of the vending machine system 10 that the payment has been received.

The notification of the payment may be transmitted to the communications interface 89 of the vending machine system 10 via communications network 98 or wireless communications link 91. Once the controller has communicated to payment system 20 that the payment has been received, the payment system 20 recognises that a payment has been processed and accordingly may allow a CO₂ gas cylinder 12 to be received in one of the bin assemblies 24 and/or release a full CO₂ gas cylinder 12 for collection by the user.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

### List of Parts

- 10: Vending machine system
- 12: CO₂ gas cylinder
- 14: Vending Machine
- 15: Main door
- 15a: High main door
- 15b: Low main door
- 16: Controller
- 18: User interface
- 20: Payment system
- 22: Array of bin assemblies
- 24: Bin assembly
- 25: Swap function button
- 26: End of CO2 gas cylinder
- 28: Locking system
- 30: Authentication system
- 31: New function button
- 32: Tubular chassis
- 33: Return function button
- 34: Sled
- 35: Display
- 36: Rotary latch
- 37: Confirm/OK function button
- 38: Latching arm
- 40: Locking bar
- 42: Open end of the chassis
- 44: Tension spring
- 46a, 46b: Long linkage member
- 48: Latching bar
- 50a, 50b: Short linkage member
- 54: Collar
- 56: Necked section
- 58a, 58b: Pin
- 60a, 60b: Slot
- 62: Terminal end section
- 64: Actuator arm
- 66: Latching sensor
- 68: Locking sensor
- 70: Bus Master
- 72: Cluster
- 74: RS485 Bus
- 76: 4G / 5G interface
- 78: Touch screen
- 80: Touchless sensors
- 82: Sensors
- 84: Facial recognition system
- 85: Contactless user interface
- 86: Proximity sensor
- 87: User device
- 88: Vending machine application
- 89: Communication interface
- 90: Data store
- 91: Wireless communications link
- 92: Display
- 93: Microphone
- 94: Communications module
- 96: Camera
- 98: Communications network
- 99: Server
- 200: Remote vending machine user interface

## Claims

1. A method for remotely controlling a CO₂ gas cylinder vending machine system, the method including:
displaying a remote vending machine user interface (200) on a display of a user device (87);
receiving on the user device (87) user input indicating a desire to engage with the vending machine system (10) to perform at least one of the following operations:
(a) return a CO₂ gas cylinder (12);
(b) purchase a CO₂ gas cylinder (12); or
(c) exchange a CO₂ gas cylinder (12);
transmitting the user input over a communications network (98) to a communications interface (89) of the vending machine system;
receiving the user input at the communication interface (89) of the vending machine system (10); and
controlling the vending machine system (10), by a controller (16), based on the received user input,
the method further including:
the user device (87) transmitting a request to the vending machine system (10) to use the vending machine system (10); and
the vending machine system (10) receiving the request from the user device (87) to use the vending machine system (10); and
the method further including:
the vending machine system (10) determining, based on the request, a proximity of the user device (87) to the vending machine system (10);
the vending machine system (10) determining, based on the determined proximity, whether the user device (87) is within a proximity threshold distance to the vending machine system (10); and
if the user device (87) is within the proximity threshold distance, controlling the vending machine system (87) by the controller (16) based on further user input.

2. The method of claim 1, further including:
receiving, at a communications module (94) of the user device (87), the remote vending machine user interface (200) from the vending machine system (10).

3. The method of claim 2, wherein:
the communications module (94) of the user device (87) receives the remote vending machine user interface (200) via at least one of the following:
(a) the communications network (98); and
(b) a wireless communications link (91) with the communications interface (89) of the vending machine system (10).

4. The method of claim 3, wherein the wireless communications link (91) uses standard communication protocols such as Bluetooth^{™} or Near-Field Communication (NFC).

5. The method of claim 1, further including:
the user device (87):
scanning, by a camera (96) of the user device (87), indicia uniquely identifying the vending machine system (10), wherein the indicia encodes a Uniform Resource Locator (URL) associated with the vending machine system (10);
decoding the scanned indicia and retrieving the URL;
sending a request to a server (99) based on the URL via the communications network (98); and
receiving, via a response from the server (99), the remote vending machine user interface (200) from the vending machine system (10), and
the server (99):
receiving the request based on the URL from the user device (87); and
sending in a response the remote vending machine user interface (200) to the user device via the communications network (98).

6. The method of any one of claims 1 to 5, further including:
the user device (87):
receiving user input corresponding to a payment; and
transmitting a notification of the payment to the communications interface (89) of the vending machine system (10), and
the vending machine system (10):
receiving the notification of the payment at the communications interface (89) of the vending machine system (10); and
communicating, by the controller (16), to a payment system (20) of the vending machine system (10) that the payment has been received.

7. A vending machine system for CO₂ gas cylinders, the system (10) including a controller (16) in communication with a contactless user interface (85), a contactless payment system (20) and an array (22) of bin assemblies, wherein each one of the bin assemblies (24) is shaped to at least partially receive an end of a CO₂ gas cylinder (12) and includes a locking system (28) for releasably securing therein a CO₂ gas cylinder (12), said system (10) for performing the steps of:
(a) receiving user input through the contactless user interface (85); and
(b) at least one of (i) to (iii):
(i) if the user input represents a desire to exchange a CO₂ gas cylinder (12), then the system performs the steps of:
(A) receiving payment from the user through the payment system (20) for a replacement CO₂ gas cylinder (12);
(B) receiving a CO₂ gas cylinder (12) in a first one of said bin assemblies (24); and
(C) the locking system (28) releasing a full CO₂ gas cylinder (12) located in a second one of said bin assemblies (24) for collection by the user,
(ii) if said user input represents a desire to purchase a full CO₂ gas cylinder (12) without replacement, then the system (10) performs the steps of:
(A) receiving payment from the user through the payment system (20) for a full CO₂ gas cylinder (12) without replacement; and
(B) the locking system (28) releasing a full CO₂ gas cylinder (12) located in a third one of said bin assemblies (24) for collection by the user, and
(iii) if said user input represents a desire to return an empty CO₂ gas cylinder (12) without replacement, then the system (10) performs the steps of:
(A) receiving a CO2 gas cylinder (12) in one of said bin assemblies (24);
(B) the locking system (28) locking the CO₂ gas cylinder (12) in said one of said bin assemblies (24); and
(C) issuing a credit to the user through the payment system (20) for return of CO₂ gas cylinder (12) without replacement,
wherein each bin assembly (24) in the array (22) includes a tubular chassis (32) shaped to receive and seat therein a CO₂ gas cylinder (12), and
wherein the locking system (28) of each bin assembly (24) in the array (22) includes a sled (34) that engages the CO₂ gas cylinder (12) as it is inserted in to the tubular chassis (32) and translates with respect to the tubular chassis (32) towards a locked position.

8. The system of claim 7, wherein the contactless user interface (85) includes at least one sensor button.

9. The system of claim 7 or 8, wherein the contactless user interface (85) includes a proximity sensor (86) for sensing when a user has approached the system (10).

10. The system of claim 9, wherein the controller (16) is configured to switch the system (10) from a low power mode to a normal operation mode when the proximity sensor (86) senses that a user has approached the system (10).

11. The system of any one of claims 7 to 10, wherein the contactless user interface (85) includes a speech recognition system configured to:
receive a user voice command via a microphone (93);
determine whether the user voice command corresponds to a user input representing a desire to either exchange, purchase or return a CO₂ gas cylinder (12).

12. The system of any one of claims 7 to 11, wherein receiving payment from the user through the payment system (20) includes the user executing the payment on a user device (87) and the vending machine system (10) receiving confirmation of this payment via a communications network (98).

13. The system claimed in any one of claims 7 to 12, including an authentication system (30) for confirming that an item to be received in one of the bin assemblies (24) is a legitimate CO₂ gas cylinder (12), said system (10) for performing the step of:
(a) confirming through the authentication system (30) that the item to be received in step (ii) is a legitimate CO₂ gas cylinder (12).

14. The system claimed in any one of claims 7 to 13, wherein the second one of said bin assemblies (24) is a bin assembly (24) in the array (22) that is closest to the first one of said bin assemblies (24) where the legitimate CO₂ gas cylinder (12) was returned.

15. The system claimed in any one of claims 7 to 14, said system (10) further including a height measurement system for measuring a height of a customer and wherein the controller (16) releases the full CO₂ gas cylinder (12) from a bin in the array (22) that is closest to the height of the user.

16. The system claimed in claim 7, wherein the sled (34) is in the locked position when the CO₂ gas cylinder (12) is fully inserted into the tubular chassis (32).

17. The system claimed in claim 16, wherein the locking system (28) of each bin assembly (24) in the array (22) includes a rotary latch (36) that is engaged by the sled (34) as it translates towards the locking position, and wherein a latching arm (38) of the rotary latch (36) secures the sled (34) in the locked position.

18. The system claimed in claim 17, wherein translation of the sled towards the locked position pulls a locking bar (40) at least partially over an opening of the tubular chassis (32) so as to secure the CO₂ gas cylinder (12) therein.

19. The system claimed in any one of claims 1 to 18, wherein the tubular chassis (32) includes a tension spring (44) that resiliently urges the sled (34) away from the locked position.

20. The system claimed in any one of claims 18 to 19, wherein the sled (34) includes:
(a) two parallel long linkage members (46a,46b) separated at a common end by a latching bar (48), the long linkage members (46a,46b) extending along opposed sides of the tubular chassis (32);
(b) two parallel short linkage members (50a,50b) pivotally secured at a common end to respective other ends of the of the long linkage members (46a,46b);
(c) a locking bar (40) coupled between other ends of the short linkage members (50a,50b); and
(d) a collar (54) shaped to receive a necked section of a CO₂ gas cylinder (12) when inserted into the tubular chassis (32);
wherein the collar (54) includes a pair of pins (58a,58b) extending in opposite directions into respective slots (60a,60b) of the long linkage members (46a,46b),
wherein, when a CO₂ gas cylinder (12) is inserted into the tubular chassis (32), the necked section of the CO₂ gas cylinder (12) engages the collar (54) and the collar (54) is subsequently urged towards the latching bar (48), and when the pins (58a,58b) of the collar (54) abut terminal end sections (62) of the slots (60a,60), the CO₂ gas cylinder (12) drives the sled (34) towards the rotary latch (36), and the latching bar (48) engages an actuator arm (64) of the rotary latch (36) and urges it towards a locked position.

21. The system claimed in any one of claims 17 to 20, wherein the authentication system (30) includes:
(a) a latching sensor (66) for detecting the state of the rotary latch (36); and
(b) a locking sensor (68) for determining the state of the locking bar (40),
wherein the latching sensor (66) and the locking sensor (68) confirm that an item inserted into the tubular chassis (32) is a legitimate CO₂ gas cylinder (12) when the sled (34) is in the locked position and the locking bar (40) at least partially overlies the open end of the tubular chassis (32).

22. The system claimed in any one of claims 17 to 21, wherein the authentication system (30) includes one or more of the following:
(a) micro switches;
(b) weight sensors;
(c) eddy current sensors;
(d) Hall effect sensors;
(e) bar code readers; and/or
(f) image sensor.

23. The system claimed in any one of claims 7 to 22, wherein the array (22) of bin assemblies is made up of a plurality of clusters (72) of sub-arrays of bin assemblies.

24. The system claimed in claim 23, wherein the clusters are modular and can be separately removed from the array (22) for repair.

25. The system claimed in any one of claims 7 to 24, wherein the end of the CO₂ gas cylinder (12) which each of the bin assemblies (24) is shaped to at least partially receive is one of:
either end of CO₂ gas cylinder (12); and
a lockable end of the CO₂ gas cylinder (12).

26. The system claimed in any one of claim 7 to 25, further including an external door (15) arranged to overlie the array (22) of bin assemblies to inhibit ingress of contaminants therein.

27. The system claimed in claim 26, wherein the door (15) is releasably secured in position by the controller (16).

## Patentansprüche

1. Verfahren zur Fernsteuerung eines CO₂-Gasflaschen-Verkaufsautomatensystems, wobei das Verfahren Folgendes beinhaltet:
Anzeigen einer entfernten Verkaufsautomaten-Benutzerschnittstelle (200) auf einer Anzeige einer Benutzervorrichtung (87);
Empfangen, auf der Benutzervorrichtung (87), einer Benutzereingabe, die den Wunsch anzeigt, mit dem Verkaufsautomatensystem (10) zu interagieren, um mindestens eine der folgenden Operationen durchzuführen:
(a) Zurückgeben einer CO₂-Gasflasche (12);
(b) Erwerben einer CO₂-Gasflasche (12); oder
(c) Austauschen einer CO₂-Gasflasche (12);
Übertragen der Benutzereingabe über ein Kommunikationsnetzwerk (98) an eine Kommunikationsschnittstelle (89) des Verkaufsautomatensystems;
Empfangen der Benutzereingabe an der Kommunikationsschnittstelle (89) des Verkaufsautomatensystems (10); und
Steuern des Verkaufsautomatensystems (10) durch eine Steuerung (16) basierend auf der empfangenen Benutzereingabe,
wobei das Verfahren ferner Folgendes beinhaltet:
Übertragen, durch die Benutzervorrichtung (87), einer Anforderung an das Verkaufsautomatensystem (10), das Verkaufsautomatensystem (10) zu benutzen; und
Empfangen, durch das Verkaufsautomatensystem (10), der Anforderung von der Benutzervorrichtung (87), das Verkaufsautomatensystem (10) zu benutzen; und
wobei das Verfahren ferner Folgendes beinhaltet:
Bestimmen, durch das Verkaufsautomatensystem (10), basierend auf der Anforderung einer Nähe der Benutzervorrichtung (87) zu dem Verkaufsautomatensystem (10);
Bestimmen, durch das Verkaufsautomatensystem (10), basierend auf der bestimmten Nähe, ob sich die Benutzervorrichtung (87) innerhalb einer Näheschwellenentfernung zu dem Verkaufsautomatensystem (10) befindet; und,
wenn sich die Benutzervorrichtung (87) innerhalb der Näheschwellenentfernung befindet, Steuern des Verkaufsautomatensystems (87) durch die Steuerung (16) basierend auf weiteren Benutzereingaben.

2. Verfahren nach Anspruch 1, ferner Folgendes beinhaltend:
Empfangen, an einem Kommunikationsmodul (94) der Benutzervorrichtung (87), der entfernten Verkaufsautomaten-Benutzerschnittstelle (200) von dem Verkaufsautomatensystem (10).

3. Verfahren nach Anspruch 2, wobei:
das Kommunikationsmodul (94) der Benutzervorrichtung (87) die entfernte Verkaufsautomaten-Benutzerschnittstelle (200) über mindestens eines von Folgendem empfängt:
(a) das Kommunikationsnetzwerk (98); und
(b) eine drahtlose Kommunikationsverbindung (91) mit der Kommunikationsschnittstelle (89) des Verkaufsautomatensystems (10).

4. Verfahren nach Anspruch 3, wobei die drahtlose Kommunikationsverbindung (91) Standardkommunikationsprotokolle wie Bluetooth^{™} oder Nahfeldkommunikation (Near-Field Communication - NFC) verwendet.

5. Verfahren nach Anspruch 1, ferner Folgendes beinhaltend:
durch die Benutzervorrichtung (87):
Scannen, durch eine Kamera (96) der Benutzervorrichtung (87), eines Kennzeichens, das das Verkaufsautomatensystem (10) eindeutig identifiziert, wobei das Kennzeichen einen Uniform Resource Locator (URL) codiert, der dem Verkaufsautomatensystem (10) zugeordnet ist;
Decodieren des gescannten Kennzeichens und Abrufen des URL;
Senden einer Anforderung an einen Server (99) basierend auf dem URL über das Kommunikationsnetzwerk (98); und
Empfangen, über eine Antwort von dem Server (99), der entfernten Verkaufsautomaten-Benutzerschnittstelle (200) von dem Verkaufsautomatensystem (10) und
durch den Server (99):
Empfangen der Anforderung basierend auf dem URL von der Benutzervorrichtung (87); und
Senden, in einer Antwort, der entfernten Verkaufsautomaten-Benutzerschnittstelle (200) an die Benutzervorrichtung über das Kommunikationsnetzwerk (98).

6. Verfahren nach einem der Ansprüche 1 bis 5, ferner Folgendes beinhaltend:
durch die Benutzervorrichtung (87):
Empfangen von Benutzereingaben, die einer Zahlung entsprechen; und
Übertragen einer Benachrichtigung über die Zahlung an die Kommunikationsschnittstelle (89) des Verkaufsautomatensystems (10) und
durch das Verkaufsautomatensystem (10):
Empfangen der Benachrichtigung über die Zahlung an der Kommunikationsschnittstelle (89) des Verkaufsautomatensystems (10); und
Kommunizieren, durch die Steuerung (16), an ein Zahlungssystem (20) des Verkaufsautomatensystems (10), dass die Zahlung eingegangen ist.

7. Verkaufsautomatensystem für CO₂-Gasflaschen, wobei das System (10) eine Steuerung (16) in Kommunikation mit einer kontaktlosen Benutzerschnittstelle (85), einem kontaktlosen Zahlungssystem (20) und einer Gruppierung (22) von Behälteranordnungen beinhaltet, wobei jede der Behälteranordnungen (24) so geformt ist, dass sie mindestens teilweise ein Ende einer CO₂-Gasflasche (12) aufnimmt und ein Verriegelungssystem (28) zum lösbaren Sichern einer CO₂-Gasflasche (12) darin beinhaltet, wobei das System (10) zum Durchführen der folgenden Schritte vorgesehen ist:
(a) Empfangen von Benutzereingaben über die kontaktlose Benutzerschnittstelle (85); und
(b) mindestens eines von (i) bis (iii):
(i) wenn die Benutzereingabe einen Wunsch darstellt, eine CO₂-Gasflasche (12) auszutauschen, führt das System die folgenden Schritte durch:
(A) Empfangen einer Zahlung von dem Benutzer über das Zahlungssystem (20) für eine Ersatz-CO₂-Gasflasche (12);
(B) Aufnehmen einer CO₂-Gasflasche (12) in einer ersten der Behälteranordnungen (24); und
(C) Freigeben, durch das Verriegelungssystem, (28) einer vollen CO₂-Gasflasche (12), die sich in einer zweiten der Behälteranordnungen (24) befindet, zur Entnahme durch den Benutzer,
(ii) wenn die Benutzereingabe einen Wunsch darstellt, eine volle CO₂-Gasflasche (12) ohne Ersatz zu erwerben, führt das System (10) die folgenden Schritte durch:
(A) Empfangen einer Zahlung von dem Benutzer über das Zahlungssystem (20) für eine volle CO₂-Gasflasche (12) ohne Ersatz; und
(B) Freigeben, durch das Verriegelungssystem, (28) einer vollen CO₂-Gasflasche (12), die sich in einer dritten der Behälteranordnungen (24) befindet, zur Entnahme durch den Benutzer, und
(iii) wenn die Benutzereingabe einen Wunsch darstellt, eine leere CO₂-Gasflasche (12) ohne Ersatz zurückzugeben, führt das System (10) die folgenden Schritte durch:
(A) Aufnehmen einer CO₂-Gasflasche (12) in einer der Behälteranordnungen (24);
(B) Verriegeln, durch das Verriegelungssystem (28), der CO₂-Gasflasche (12) in der einen der Behälteranordnungen (24); und
(C) Ausstellen einer Gutschrift an den Benutzer über das Zahlungssystem (20) für die Rückgabe der CO₂-Gasflasche (12) ohne Ersatz,
wobei jede Behälteranordnung (24) in der Gruppierung (22) einen rohrförmigen Rahmen (32) beinhaltet, der so geformt ist, dass er darin eine CO₂-Gasflasche (12) aufnimmt und unterbringt, und
wobei das Verriegelungssystem (28) jeder Behälteranordnung (24) in der Gruppierung (22) einen Schlitten (34) beinhaltet, der in die CO₂-Gasflasche (12) eingreift, wenn sie in den rohrförmigen Rahmen (32) eingesetzt wird, und sich in Bezug auf den rohrförmigen Rahmen (32) in Richtung einer verriegelten Position verschiebt.

8. System nach Anspruch 7, wobei die kontaktlose Benutzerschnittstelle (85) mindestens eine Sensortaste beinhaltet.

9. System nach Anspruch 7 oder 8, wobei die kontaktlose Benutzerschnittstelle (85) einen Näherungssensor (86) zum Erfassen, wenn sich ein Benutzer dem System (10) genähert hat, beinhaltet.

10. System nach Anspruch 9, wobei die Steuerung (16) dazu konfiguriert ist, das System (10) von einem Energiesparmodus in einen normalen Betriebsmodus umzuschalten, wenn der Näherungssensor (86) erfasst, dass sich ein Benutzer dem System (10) genähert hat.

11. System nach einem der Ansprüche 7 bis 10, wobei die kontaktlose Benutzerschnittstelle (85) ein Spracherkennungssystem beinhaltet, das zu Folgendem konfiguriert ist:
Empfangen eines Benutzersprachbefehls über ein Mikrofon (93);
Bestimmen, ob der Benutzersprachbefehl einer Benutzereingabe entspricht, die einen Wunsch darstellt, eine CO₂-Gasflasche (12) auszutauschen, zu erwerben oder zurückzugeben.

12. System nach einem der Ansprüche 7 bis 11, wobei das Empfangen von Zahlungen von dem Benutzer über das Zahlungssystem (20) beinhaltet, dass der Benutzer die Zahlung auf einer Benutzervorrichtung (87) ausführt und das Verkaufsautomatensystem (10) eine Bestätigung dieser Zahlung über ein Kommunikationsnetzwerk (98) empfängt.

13. System nach einem der Ansprüche 7 bis 12, beinhaltend ein Authentifizierungssystem (30) zum Bestätigen, dass ein Gegenstand, der in einer der Behälteranordnungen (24) aufgenommen werden soll, eine zulässige CO₂-Gasflasche (12) ist, wobei das System (10) zum Durchführen des folgenden Schritts vorgesehen ist:
(a) Bestätigen, über das Authentifizierungssystem (30), dass der in Schritt (ii) aufzunehmende Gegenstand eine zulässige CO₂-Gasflasche (12) ist.

14. System nach einem der Ansprüche 7 bis 13, wobei die zweite der Behälteranordnungen (24) eine Behälteranordnung (24) in der Gruppierung (22) ist, die der ersten der Behälteranordnungen (24) am nächsten ist, in die die zulässige CO₂-Gasflasche (12) zurückgegeben wurde.

15. System nach einem der Ansprüche 7 bis 14, wobei das System (10) ferner ein Körpergrößenmesssystem zum Messen einer Körpergröße eines Kunden beinhaltet und wobei die Steuerung (16) die volle CO₂-Gasflasche (12) aus einem Behälter in der Gruppierung (22) freigibt, die der Körpergröße des Benutzers am nächsten kommt.

16. System nach Anspruch 7, wobei sich der Schlitten (34) in der verriegelten Position befindet, wenn die CO₂-Gasflasche (12) vollständig in den rohrförmigen Rahmen (32) eingesetzt ist.

17. System nach Anspruch 16, wobei das Verriegelungssystem (28) jeder Behälteranordnung (24) in der Gruppierung (22) eine Drehfalle (36) beinhaltet, in die der Schlitten (34) eingreift, wenn er sich in Richtung der Verriegelungsposition verschiebt, und wobei ein Einrastarm (38) der Drehfalle (36) den Schlitten (34) in der verriegelten Position sichert.

18. System nach Anspruch 17, wobei die Verschiebung des Schlittens in Richtung der verriegelten Position eine Verriegelungsstange (40) mindestens teilweise über eine Öffnung des rohrförmigen Rahmens (32) zieht, um die CO₂-Gasflasche (12) darin zu sichern.

19. System nach einem der Ansprüche 1 bis 18, wobei der rohrförmige Rahmen (32) eine Zugfeder (44) beinhaltet, die den Schlitten (34) elastisch von der verriegelten Position wegdrückt.

20. System nach einem der Ansprüche 18 bis 19, wobei der Schlitten (34) Folgendes beinhaltet:
(a) zwei parallele lange Verbindungselemente (46a, 46b), die an einem gemeinsamen Ende durch eine Einraststange (48) getrennt sind, wobei sich die langen Verbindungselemente (46a, 46b) entlang gegenüberliegenden Seiten des rohrförmigen Rahmens (32) erstrecken;
(b) zwei parallele kurze Verbindungselemente (50a, 50b), die an einem gemeinsamen Ende schwenkbar an jeweils anderen Enden der langen Verbindungselemente (46a, 46b) gesichert sind;
(c) eine Verriegelungsstange (40), die zwischen anderen Enden der kurzen Verbindungselemente (50a, 50b) gekoppelt ist; und
(d) eine Manschette (54), die so geformt ist, dass sie einen eingeschnürten Abschnitt einer CO₂-Gasflasche (12) aufnimmt, wenn sie in den rohrförmigen Rahmen (32) eingesetzt wird;
wobei die Manschette (54) ein Paar Stifte (58a, 58b) beinhaltet, das sich in entgegengesetzte Richtungen in jeweilige Schlitze (60a, 60b) der langen Verbindungselemente (46a, 46b) erstreckt,
wobei, wenn eine CO₂-Gasflasche (12) in den rohrförmigen Rahmen (32) eingesetzt wird, der einschnürte Abschnitt der CO₂-Gasflasche (12) in die Manschette (54) eingreift und die Manschette (54) anschließend in Richtung der Einraststange (48) gedrückt wird, und wenn die Stifte (58a, 58b) der Manschette (54) an terminalen Endabschnitten (62) der Schlitze (60a, 60) anliegen, die CO₂-Gasflasche (12) den Schlitten (34) in Richtung der Drehfalle (36) treibt und die Einraststange (48) in einen Betätigungsarm (64) der Drehfalle (36) eingreift und sie in Richtung einer verriegelten Position drückt.

21. System nach einem der Ansprüche 17 bis 20, wobei das Authentifizierungssystem (30) Folgendes beinhaltet:
(a) einen Einrastsensor (66) zum Erfassen des Zustands der Drehfalle (36); und
(b) einen Verriegelungssensor (68) zum Bestimmen des Zustands der Verriegelungsstange (40),
wobei der Einrastsensor (66) und der Verriegelungssensor (68) bestätigen, dass ein in den rohrförmigen Rahmen (32) eingesetzter Gegenstand eine zulässige CO₂-Gasflasche (12) ist, wenn sich der Schlitten (34) in der verriegelten Position befindet und die Verriegelungsstange (40) mindestens teilweise über dem offenen Ende des rohrförmigen Rahmen (32) liegt.

22. System nach einem der Ansprüche 17 bis 21, wobei das Authentifizierungssystem (30) eines oder mehrere von Folgendem beinhaltet:
(a) Mikroschalter;
(b) Gewichtssensoren;
(c) Wirbelstromsensoren;
(d) Hall-Effekt-Sensoren;
(e) Strichcodeleser; und/oder
(f) einen Bildsensor.

23. System nach einem der Ansprüche 7 bis 22, wobei die Gruppierung (22) von Behälteranordnungen aus einer Vielzahl von Ansammlungen (72) von Untergruppierungen von Behälteranordnungen besteht.

24. System nach Anspruch 23, wobei die Ansammlungen modular aufgebaut sind und zur Reparatur separat aus der Gruppierung (22) entfernt werden können.

25. System nach einem der Ansprüche 7 bis 24, wobei das Ende der CO₂-Gasflasche (12), das mindestens teilweise durch jede der entsprechend geformten Behälteranordnungen (24) aufgenommen werden soll, eines von Folgendem ist:
entweder eines der Enden der CO₂-Gasflasche (12); oder
ein verriegelbares Ende der CO₂-Gasflasche (12).

26. System nach einem der Ansprüche 7 bis 25, ferner eine Außentür (15) beinhaltend, die so angeordnet ist, dass sie die Gruppierung (22) von Behälteranordnungen überlagert, um das Eindringen von Verunreinigungen in diese zu verhindern.

27. System nach Anspruch 26, wobei die Tür (15) durch die Steuerung (16) lösbar in ihrer Position gesichert ist.

## Revendications

1. Procédé de commande à distance d'un système de distributeur automatique de bouteille de gaz CO₂, le procédé comprenant :
l'affichage d'une interface utilisateur de distributeur automatique à distance (200) sur un affichage d'un dispositif utilisateur (87) ;
la réception sur le dispositif utilisateur (87) d'une entrée utilisateur indiquant un désir d'interagir avec le système de distributeur automatique (10) pour effectuer au moins l'une des opérations suivantes :
(a) le renvoi d'une bouteille de gaz CO₂ (12) ;
(b) l'achat d'une bouteille de gaz CO₂ (12) ; ou
(c) l'échange d'une bouteille de gaz CO₂ (12) ;
la transmission de l'entrée utilisateur sur un réseau de communication (98) à une interface de communication (89) du système de distributeur automatique ;
la réception de l'entrée utilisateur à l'interface de communication (89) du système de distributeur automatique (10) ; et
la commande du système de distributeur automatique (10) par un contrôleur (16) en fonction de l'entrée utilisateur reçue,
le procédé comprenant en outre :
la transmission par le dispositif utilisateur (87) d'une demande d'utilisation du système de distributeur automatique (10) au système de distributeur automatique (10) ; et
la réception par le système de distributeur automatique (10) de la demande d'utilisation du système de distributeur automatique (10) par le dispositif utilisateur (87) ; et
le procédé comprenant en outre :
la détermination par le système de distributeur automatique (10), en fonction de la demande, de la proximité du dispositif utilisateur (87) avec le système de distributeur automatique (10) ;
la détermination par le système de distributeur automatique (10), en fonction de la proximité déterminée, si le dispositif utilisateur (87) se trouve à une distance seuil de proximité du système de distributeur automatique (10) ; et
si le dispositif utilisateur (87) se trouve à une distance seuil de proximité, la commande du système de distributeur automatique (87) par le contrôleur (16) en fonction d'une entrée utilisateur supplémentaire.

2. Procédé selon la revendication 1, comprenant en outre :
la réception, au niveau d'un module de communication (94) du dispositif utilisateur (87), de l'interface utilisateur de distributeur automatique à distance (200) en provenance du système de distributeur automatique (10).

3. Procédé selon la revendication 2, dans lequel :
le module de communication (94) du dispositif utilisateur (87) reçoit l'interface utilisateur de distributeur automatique à distance (200) via au moins l'un des éléments suivants :
(a) le réseau de communication (98) ; et
(b) une liaison de communication sans fil (91) avec l'interface de communication (89) du système de distributeur automatique (10).

4. Procédé selon la revendication 3, dans lequel la liaison de communication sans fil (91) utilise des protocoles de communication standard tels que Bluetooth^{™} ou la communication en champ proche (NFC).

5. Procédé selon la revendication 1, comprenant en outre :
le dispositif utilisateur (87) :
balayant, par une caméra (96) du dispositif utilisateur (87), des indices identifiant de manière unique le système de distributeur automatique (10), les indices codant un localisateur de ressources uniformes (URL) associé au système de distributeur automatique (10) ;
décodant les indices balayés et la récupération de l'URL ;
envoyant d'une demande à un serveur (99) sur la base de l'URL via le réseau de communication (98) ; et
recevant, via une réponse du serveur (99), l'interface utilisateur de distributeur automatique à distance (200) en provenance du système de distributeur automatique (10), et
le serveur (99) :
recevant la demande basée sur l'URL du dispositif utilisateur (87) ; et
envoyant une réponse de l'interface utilisateur du distributeur automatique à distance (200) au dispositif utilisateur via le réseau de communication (98).

6. Procédé selon l'une quelconque des revendications 1 à 5, comprenant en outre :
le dispositif utilisateur (87) :
recevant une entrée utilisateur correspondant à un paiement ; et
transmettant une notification du paiement à l'interface de communication (89) du système de distributeur automatique (10), et
le système de distributeur automatique (10) :
recevant la notification du paiement à l'interface de communication (89) du système de distributeur automatique (10) ; et
communiquant, par l'intermédiaire du contrôleur (16), à un système de paiement (20) du système de distributeur automatique (10) que le paiement a été reçu.

7. Système de distributeur automatique de bouteille de CO₂, le système (10) comprenant un contrôleur (16) en communication avec une interface utilisateur sans contact (85), un système de paiement sans contact (20) et un réseau (22) d'ensemble de bac, dans lequel chacun de l'ensemble de bacs (24) est conçu pour recevoir au moins partiellement l'extrémité d'une bouteille de CO₂ (12) et comprend un système de verrouillage (28) permettant de fixer de manière amovible une bouteille de CO₂ (12), ledit système (10) pour effectuer les étapes suivantes :
(a) la réception d'une entrée utilisateur via l'interface utilisateur sans contact (85) ; et
(b) au moins l'un des éléments (i) à (iii) :
(i) si l'entrée utilisateur représente un désir d'échanger une bouteille de gaz CO₂ (12), alors le système exécute les étapes suivantes :
(A) la réception du paiement de l'utilisateur via le système de paiement (20) pour une bouteille de gaz CO₂ de remplacement (12) ;
(B) la réception d'une bouteille de gaz CO₂ (12) dans un premier desdits ensembles de bacs (24) ; et
(C) le système de verrouillage (28) libérant une bouteille de gaz CO₂ pleine (12) située dans un deuxième desdits ensembles de bacs (24) pour être récupérée par l'utilisateur,
(ii) si ladite entrée utilisateur représente un désir d'acheter une bouteille de gaz CO₂ pleine (12) sans remplacement, alors le système (10) effectue les étapes suivantes :
(A) la réception du paiement de l'utilisateur via le système de paiement (20) pour une bouteille de gaz CO₂ pleine (12) sans remplacement ; et
(B) le système de verrouillage (28) libérant une bouteille de gaz CO₂ pleine (12) située dans un troisième desdits ensembles de bacs (24) pour la collecte par l'utilisateur, et
(iii) si ladite entrée utilisateur représente un désir de retourner une bouteille de gaz CO₂ vide (12) sans remplacement, alors le système (10) effectue les étapes suivantes :
(A) la réception d'une bouteille de gaz CO₂ (12) dans l'un desdits ensembles de bacs (24) :
(B) le système de verrouillage (28) verrouillant la bouteille de gaz CO₂ (12) dans ledit ensemble de bacs (24) ; et
(C) l'émission d'un crédit à l'utilisateur via le système de paiement (20) pour le retour de la bouteille de gaz CO₂ (12) sans remplacement,
dans lequel chaque ensemble de bacs (24) dans le réseau (22) comprend un châssis tubulaire (32) formé pour recevoir et accueillir à l'intérieur de celui-ci une bouteille de gaz CO₂ (12), et dans lequel le système de verrouillage (28) de chaque ensemble de bacs (24) dans le réseau (22) comprend un traîneau (34) qui engage la bouteille de gaz CO₂ (12) lorsqu'elle est insérée dans le châssis tubulaire (32) et se déplace par rapport au châssis tubulaire (32) vers une position verrouillée.

8. Système selon la revendication 7, dans lequel l'interface utilisateur sans contact (85) comprend au moins un bouton de capteur.

9. Système selon la revendication 7 ou 8, dans lequel l'interface utilisateur sans contact (85) comprend un capteur de proximité (86) pour détecter lorsqu'un utilisateur s'est approché du système (10).

10. Système selon la revendication 9, dans lequel le contrôleur (16) est configuré pour commuter le système (10) d'un mode basse consommation à un mode de fonctionnement normal lorsque le capteur de proximité (86) détecte qu'un utilisateur s'est approché du système (10).

11. Système selon l'une quelconque des revendications 7 à 10, dans lequel l'interface utilisateur sans contact (85) comprend un système de reconnaissance vocale configuré pour :
recevoir une commande vocale d'utilisateur via un microphone (93) ;
déterminer si la commande vocale d'utilisateur correspond à une entrée utilisateur représentant un désir d'échanger, d'acheter ou de retourner une bouteille de gaz CO₂ (12).

12. Système selon l'une quelconque des revendications 7 à 11, dans lequel la réception du paiement de l'utilisateur par l'intermédiaire du système de paiement (20) comprend l'exécution du paiement par l'utilisateur sur un dispositif utilisateur (87) et la réception par le système de distributeur automatique (10) de la confirmation de ce paiement par l'intermédiaire d'un réseau de communication (98).

13. Système selon l'une quelconque des revendications 7 à 12, comprenant un système d'authentification (30) permettant de confirmer qu'un article à recevoir dans l'un des ensembles de bacs (24) est une bouteille de gaz CO₂ légitime (12), ledit système (10) permettant d'effectuer l'étape suivante :
(a) la confirmation par le biais du système d'authentification (30) que l'article à recevoir à l'étape (ii) est une bouteille de gaz CO₂ légitime (12).

14. Système selon l'une quelconque des revendications 7 à 13, dans lequel le deuxième desdits ensembles de bacs (24) est un ensemble de bacs (24) dans le réseau (22) qui est le plus proche du premier desdits ensembles de bacs (24) où la bouteille de gaz CO₂ légitime (12) a été renvoyée.

15. Système selon l'une quelconque des revendications 7 à 14, ledit système (10) comprenant en outre un système de mesure de la hauteur pour mesurer la hauteur d'un client et dans lequel le contrôleur (16) libère la bouteille de gaz CO₂ pleine (12) d'un bac dans le réseau (22) qui est le plus proche de la hauteur de l'utilisateur.

16. Système selon la revendication 7, dans lequel le traîneau (34) est en position verrouillée lorsque la bouteille de gaz CO₂ (12) est entièrement insérée dans le châssis tubulaire (32).

17. Système selon la revendication 16, dans lequel le système de verrouillage (28) de chaque ensemble de bacs (24) dans le réseau (22) comprend un loquet rotatif (36) qui est engagé par le traîneau (34) lorsqu'il se déplace vers la position de verrouillage, et dans lequel un bras de verrouillage (38) du loquet rotatif (36) fixe le traîneau (34) dans la position verrouillée.

18. Système selon la revendication 17, dans lequel la translation du traîneau vers la position verrouillée tire une barre de verrouillage (40) au moins partiellement sur une ouverture du châssis tubulaire (32) de manière à fixer la bouteille de gaz CO₂ (12) à l'intérieur de celle-ci.

19. Système selon l'une quelconque des revendications 1 à 18, dans lequel le châssis tubulaire (32) comprend un ressort de tension (44) qui pousse de manière résiliente le traîneau (34) loin de la position verrouillée.

20. Système selon l'une quelconque des revendications 18 à 19, dans lequel le traîneau (34) comprend :
(a) deux éléments de liaison longs parallèles (46a, 46b) séparés à une extrémité commune par une barre de verrouillage (48), les éléments de liaison longs (46a, 46b) s'étendant le long des côtés opposés du châssis tubulaire (32) ;
(b) deux éléments de liaison courts parallèles (50a, 50b) fixés de manière pivotante à une extrémité commune aux autres extrémités respectives des éléments de liaison longs (46a, 46b) ;
(c) une barre de verrouillage (40) couplée entre les autres extrémités des éléments de liaison courts (50a, 50b) ; et
(d) un collier (54) formé pour recevoir une section rétrécie d'une bouteille de gaz CO₂ (12) lorsqu'elle est insérée dans le châssis tubulaire (32) ;
dans lequel le collier (54) comprend une paire de broches (58a, 58b) s'étendant dans des directions opposées dans des fentes respectives (60a, 60b) des longs éléments de liaison (46a, 46b),
dans lequel, lorsqu'une bouteille de gaz CO₂ (12) est insérée dans le châssis tubulaire (32), la section rétrécie de la bouteille de gaz CO₂ (12) engage le collier (54) et le collier (54) est ensuite poussé vers la barre de verrouillage (48), et lorsque les broches (58a, 58b) du collier (54) butent contre les sections d'extrémité terminales (62) des fentes (60a, 60), la bouteille de gaz CO₂ (12) entraîne le traîneau (34) vers le loquet rotatif (36), et la barre de verrouillage (48) engage un bras d'actionnement (64) du loquet rotatif (36) et le pousse vers une position verrouillée.

21. Système selon l'une quelconque des revendications 17 à 20, dans lequel le système d'authentification (30) comprend :
(a) un capteur d'encliquetage (66) pour détecter l'état du loquet rotatif (36) ; et
(b) un capteur de verrouillage (68) pour déterminer l'état de la barre de verrouillage (40), dans lequel le capteur d'encliquetage (66) et le capteur de verrouillage (68) confirment qu'un article inséré dans le châssis tubulaire (32) est une bouteille de gaz CO₂ légitime (12) lorsque le traîneau (34) est en position verrouillée et la barre de verrouillage (40) recouvre au moins partiellement l'extrémité ouverte du châssis tubulaire (32).

22. Système selon l'une quelconque des revendications 17 à 21, dans lequel le système d'authentification (30) comprend un ou plusieurs des éléments suivants :
(a) des micro-interrupteurs ;
(b) des capteurs de poids ;
(c) des capteurs à courants de Foucault ;
(d) des capteurs à effet Hall ;
(e) des lecteurs de codes-barres ; et/ou
(f) un capteur d'image.

23. Système selon l'une quelconque des revendications 7 à 22, dans lequel le réseau (22) d'ensembles de bacs est constitué d'une pluralité de groupes (72) de sous-réseaux d'ensembles de bacs.

24. Système selon la revendication 23, dans lequel les groupes sont modulaires et peuvent être retirés séparément du réseau (22) pour réparation.

25. Système selon l'une quelconque des revendications 7 à 24, dans lequel l'extrémité de la bouteille de gaz CO₂ (12) que chacun des ensembles de bacs (24) est conçu pour recevoir au moins partiellement est l'une des suivantes :
chaque extrémité de la bouteille de gaz CO₂ (12) ; et
une extrémité verrouillable de la bouteille de gaz CO₂ (12).

26. Système selon l'une quelconque des revendications 7 à 25, comprenant en outre une porte externe (15) disposée de manière à recouvrir le réseau (22) d'ensembles de bacs afin d'empêcher la pénétration de contaminants à l'intérieur de ceux-ci.

27. Système selon la revendication 26, dans lequel la porte (15) est fixée de manière amovible en position par le contrôleur (16).
